# EUROPÄISCHE PATENTSCHRIFT

(11) **EP 4 015 592 B1**
(45) Veröffentlichungstag und Bekanntmachung des Hinweises auf die Patenterteilung: **18.03.2026**
(21) Anmeldenummer: 21211669.3
(22) Anmeldetag: 01.12.2021
(51) Int. Cl.: C09D 183/06

(54) **HÄRTBARE KONDENSATIONSVERBINDUNGEN AUF BASIS VON ALKOXYFUNKTIONELLEN POLYSILOXANEN**
CURABLE CONDENSATION COMPOUNDS ON THE BASIS OF ALKOXY-FUNCTIONAL POLYSILOXANES
COMPOSÉS DE CONDENSATION DURCISSABLES À BASE DE POLYSILOXANES ALKOXY-FONCTIONNELS

(30) Priorität: 09.12.2020 EP 20212611
(43) Veröffentlichungstag der Anmeldung: 22.06.2022
(73) Patentinhaber: Evonik Operations GmbH, 45128 Essen (DE)
(72) Erfinder: de Gans, Berend-Jan, 45478 Mülheim an der Ruhr (DE); Favresse, Philippe, 40880 Ratingen (DE); Knott, Wilfried, 45355 Essen (DE); Dudzik, Horst, 45326 Essen (DE); Hallack, Markus, 46514 Schermbeck (DE); Düllmann, Florian, 58099 Hagen (DE)
(74) Vertreter: Evonik Patent Association

(56) Entgegenhaltungen:
- DE-A1- 2 116 816

## Beschreibung

Die Erfindung betrifft härtbare Kondensationsverbindungen auf Basis von alkoxyfunktionellen Polysiloxanen, deren Herstellungsverfahren sowie deren Verwendung in Beschichtungssysteme, die u.a. eine schmutzabweisende Eigenschaft aufweisen.

Beschichtungen werden auf Oberflächen zu dekorativen, funktionellen Zwecken oder zu Schutzzwecken aufgebracht. Dabei nimmt die Nachfrage nach Oberflächenschutz in unterschiedlichen Industriebereichen, wie Flugzeug, Automobil, Schienenfahrzeug, Schiffbau und Windenergie, stetig zu.

Bei der Funktionalisierung von Oberflächen und Beschichtungen werden verschiedene Technologien eingesetzt. Aus der Literatur ist der Ansatz der Oberflächenfunktionalisierung durch Mikro- und Nanostrukturierung von Beschichtungen, abgeleitet von der Schuppenstruktur von Haien, bekannt. Derartige Oberflächen werden bei Bauteilen von Schiffen, Flugzeugen, Rotorblättern von Windenergieanlagen oder Pipeline angewandt, um den Strömungswiderstand zu reduzieren. Auch selbstheilende Beschichtungen wurden entwickelt, bei denen eingekapselte funktionelle Wirkstoffe bei mechanischer Beschädigung des Systems freigesetzt werden und dann ihre heilende Wirkung entfalten. Diese selbstheilenden Oberflächen sind für den Korrosionsschutz interessant.

Ein weiteres bekanntes Problem sind die durch Vandalismus bedingten Verunreinigungen, wie z.B. die Graffiti-Schmierereien an Wänden oder Gegenständen. Dieses Problem betrifft nicht nur die Kommunen, sondern besonders auch die Verkehrsunternehmen. Denn die Reinigung solcher Oberflächen ist sehr aufwendig und kostspielig.

Es wurden große Anstrengungen bei der Entwicklung von Reinigungstechniken zur Entfernung von Graffitis gesetzt. Eine übliche Technik ist das Abtragen der Oberfläche mit einem Farbentferner, wie etwa Methylenchlorid, Benzol oder Toluol. Je nach Untergrund, Temperatur und Farbmittel und entsprechender Einwirkzeit wird das Farbmittel mittels beispielsweise eines Hochdruckreiniger entfernt. Dieser Prozess kann/muss mehrmals wiederholt werden. Etwaige Graffiti-Reste können dann durch Sandstrahlen entfernt werden, was ein Nachbearbeiten der Oberfläche erfordern kann, um ihr früheres Erscheinungsbild wiederherzustellen. Eine andere Technik ist es, die Oberfläche aufwendig neu zu lackieren bzw. zu beschichten, was ebenfalls viel Zeit erfordert und erhebliche Kosten verursachen kann.

Des Weiteren sind Antifouling-Beschichtungen bzw. Foul-Release-Beschichtungen bekannt, durch die der Algen- und Muschelbewuchs von Oberflächen, die im ständigen Kontakt mit Wasser stehen, verhindert oder zumindest deutlich erschwert wird. Besonders bei den permanenter Bewässerung ausgesetzten Strukturen, wie z. B. bei Schiffsrümpfen, Bojen, Fischnetzen, Zug- und Abflussrohren zum Kühlen, off-shore-Bohranlagen oder Wassertanks, die dem Meerwasser und/oder Süßwasser ausgesetzt sind, verursacht das Anhaften und das Wachstum von Organismen (Bio-Fouling) beträchtliche ökonomische Verluste. Diese resultieren im Falle von Schiffen z.B. aus der erhöhten Reibung und dem damit einhergehend erhöhten Treibstoffverbrauch. Auch erleiden Oberflächen bei statischen Strukturen durch den erhöhten Widerstand gegenüber Wellen oder Strömungen mechanischen Schaden, was zu kürzeren Wartungszyklen führt und somit auch zu einer verringerten Betriebszeit.

Foul-Release Beschichtungen basieren oft auf Polysiloxanen oder Silikon-Elastomeren deren Wirkmechanismus in der Ausbildung einer Antihaft-Oberfläche besteht, auf der Wasserorganismen nicht anhaften können oder die Haftkräfte so niedrig sind, dass sie durch die Bewegung im Wasser abgelöst werden.

Es ist daher bekannt, Beschichtungen Polysiloxane zuzusetzen, um bestimmte Eigenschaften zu erzielen. Durch die chemische Modifizierung der Polydimethylsiloxan-Kette beispielsweise konnten die wichtigsten Silikon-Eigenschaften, wie etwa Verträglichkeit, Gleitwiderstand oder Kratzfestigkeit gesteuert werden. Der Einsatz der Polysiloxane ist weit gestreut und sehr vielschichtig.

Seit den Anfängen der Silikonindustrie besitzen kondensationsvernetzbare hydroxy- und/ oder insbesondere alkoxy-terminierte aber auch acetoxyfunktionelle Polydiorganosiloxane als typische Vertreter von Silikonharzvorprodukten eine herausragende Bedeutung. So zielt die Lehre der EP 0 157 318 B1 auf ein Verfahren zur Herstellung von Silikonharzvorprodukten der allgemeinen Formel R²ₐSi(OR¹)_{b}O_{(4-a-b)/2} ab, die durch Alkoholyse/Hydrolyse und partielle Kondensation von Organochlorsilanen mit Alkohol/Wasser gewonnen werden.

DE 21 16 816 A1 beschreibt vulkanisierbare Siliconkautschuke, wobei Alkoxyacetoxysiloxane, hergestellt aus einem Silangemisch bestehend aus Ethyltriacetoxysilan, Methyltriacetoxysilan und Tetraethoxysilan, verwendet werden.

CN105131293 B geht auf acetoxy-funktionalisierte MQ-Harze und deren Herstellung ein. In einem Hydrolysemedium bestehend aus verdünnter Salzsäure und Ethanol werden demgemäß zunächst Hexamethyldisiloxan und Tetraethoxysilan zu einem ethoxyfunktionellen Silikonharz-Präpolymer umgesetzt und dieses wird in einem zweiten Schritt durch Reaktion mit einem Organoacetoxysilan zu einem selbstvernetzenden Acetoxy-MQ-Harz modifiziert.

In ähnliche Richtung geht die Lehre von Clarke (US 3.032.529), die stabilisierte Organopolysiloxanharze beschreibt. Mit dem Ziel lagerstabile Silikonbeschichtungssysteme für Holz-, Kunststoff-, Metall- und Keramikoberflächen herzustellen, die innerhalb von 24 Stunden bei Raumtemperatur aushärten, lehrt die Schrift die Acylierung reiner und/ oder gemischter, unvollständig kondensierter =Si-OH terminierter Diorganosiloxanen mit Acylierungsmitteln, vorzugsweise mit Triacyloxysilanen, um alle Si-gebundenen Hydroxylgruppen zu entfernen.

Ohne auf die Nutzung von Acetoxysiloxanen abzustellen, beschäftigt sich US 4,585,705 (Broderick et al.) mit organopolysiloxan-basierten, auf dem Substrat härtbaren Trennbeschichtungen, in die hydroxyfunktionelle Methyl-, Phenyl- und gemischte Methyl-Phenylharze neben einem Methyltrimethoxysilan(derivat), und auch kleine Anteile trimethylsilyl-endgeblockter Diorganosiloxane sowie Titanatester Eingang nehmen.

Ebenfalls bekannt ist die Verknüpfung von terminal hydroxyfunktionellen Siloxanen (PDM-Siloxanen) mit einem multifunktionellen Acetoxysilan als Quervernetzer zu hydrolytisch instabilen, mit Acetoxygruppen versehenen Siloxanpräpolymeren (H.F. Mark, Concise Encyclopedia of Polymer Science and Technology, 3rd Edition, Seite 1112, Wiley-Verlag, (2013) und auch in A.S. Hoffman et al., Biomaterials Science: An Introduction to Material in Medicine, 2nd Edition, Seiten 83 - 84, Elsevier Acad. Press, San Diego, (2004)).

Mit US 2009/0226609 beanspruchen Boisvert et al. Q-Titan basierte Silikonharze, die hergestellt werden, indem man ein Stoffsystem bestehend aus Di-(t-butoxy)diacetoxysilan, Tetrahydrofuran, Wasser und Tetra(t-butoxy)titan zur Reaktion bringt.

Gemäß C. Robeyns et al. (Progress in Organic Coatings 125, S. 287 - 315, (2018) findet hierbei zunächst eine Hydrolyse des Di-(t-Butoxy)diacetoxysilans unter Bildung von Ortho-Kieselsäure Si(OH)₄ statt, die dann unter Freisetzung von 4 Äquivalenten t-Butanol mit Tetra(t-butoxy)titan zum gemischten Titan-silikonharz kondensiert.

Der Einsatz von Titanaten ist jedoch im Hinblick auf ihre Neigung zur Zersetzung in Anwesenheit von Wasser problematisch, da diese zur Bildung und Ausfällung des unlöslichen und speziell in Beschichtungssystemen Trübung verursachenden, vierwertigen Titanhydroxids führt. Das gilt insbesondere für diejenigen Systeme, bei denen man in Gegenwart von Titanaten eine Hydrolyse durchführt. Zur Überwindung dieses Problem, speziell bei der Herstellung von anti-abrasiven Beschichtungssystemen für transparentes Polycarbonat, schlägt Leclaire (US 5,357,024) vor, ein Alkoxysilan-Hydrolysat, das kondensationsfähige =SiOH-Gruppen besitzt, mit einer Acyltitanat-Verbindung und unter nachgeschaltetem Wasserzusatz in Verdünnung umzusetzen, so dass hieraus ein Siloxan-Präpolymer mit hierin gebundenem Titan im Bereich von 20 bis 30 Gewichtsprozent TiO₂ bezogen auf den Festkörper entsteht. Leclaire gewinnt die Acyltitanatverbindungen, indem er Tetraalkyltitanate bzw. Tetraalkoxytitan-Verbindungen in nichtwässrigen Solventien, wie zum Beispiel in Alkoholen mit Carbonsäuren zur Umsetzung bringt.

Leclaire beobachtet bei Einsatz dieser hydrolysierbaren Titanverbindungen nicht die Bildung von Präzipitaten in den Beschichtungsmatrizes, selbst wenn die Hydrolyse der Silane unter harschen Bedingungen erfolgt. Leclaire interpretiert diese Beobachtung mit der Annahme, dass die in der Titanverbindung gebundene(n) Acyloxygruppe(n) die Reaktivität der Titanverbindung verringer(t)n.

US 5,357,024 lehrt weiter, dass diese Acyltitanate ausgehend von Tetra-Alkyltitanaten erhalten werden, bei denen man die Alkoxyfunktionen mit Acyloxyfunktionen substituiert. Die Herstellung erfolgt in Abwesenheit von Wasser durch Reaktion eines Tetra-Alkoxytitans oder eines Tetra-Alkyltitanats der Formel Ti(OR')₄, worin die Reste R' gleich oder verschieden sein können, mit einer Carbonsäure RCOOH, wobei man die Menge der für diese Reaktion verwendeten Säure je nach Anzahl der Alkoxyfunktionen, die man substituieren möchte, in Mengen von 1 bis 4 Äquivalenten Säure zu 1 Äquivalent Tetra-Alkoxytitan wählt. Die Reaktion erfolgt vorzugsweise in Gegenwart eines geeigneten, nicht- wässrigen Lösungsmittel, z. B. eines Alkohols wie Isopropanol.

Eine silanische AB₃-Typ-Vorstufe zum Aufbau hyperverzweigter Polyethoxysiloxane anstrebend, beschreiben Jaumann et al. in Macromol. Chem. Phys. 2003, 204, 1014-1026 die bei 137°C und über einen Zeitraum von mindestens 36 Stunden (in Dissertation M. Jaumann, 04.09.2008, RWTH Aachen S. 47 sogar 89 Stunden benötigend) stattfindende Reaktion von Tetraethoxysilan mit Acetanhydrid, die unter Ethylacetatfreisetzung Acetoxytriethoxysilan in Ausbeuten von nur ca. 39% als AB₃-Typ-Vorstufe hervorbringt. Den Versuch unternehmend, die unbefriedigende Reaktionskinetik zu verbessern, setzt Jaumann auch Tetraethylorthotitanat als Katalysator in niedriger und hoher Dosierung ein. Mit 0,155 mol-% Tetraethylorthotitanat-Zusatz reduziert sich der Zeitbedarf der mit dann ca. 94% Umsatz verlaufenden Reaktion auf 14,5 Stunden. 0,95 mol-% Tetraethylorthotitanat-Zusatz verkürzt bei ca. 88% Umsatz die Reaktionszeit auf 1,5 Stunden jedoch unter massiven Verlust der Produktreinheit. Im daraus gewonnenen Polyethoxysiloxan stammen ca. 6 mol-% aller Si-Atome aus dem eingesetzten Tetraethoxysilan (Dissertation M. Jaumann, 04.09.2008, RWTH Aachen S. 47 - 50).

Gleichfalls JaumannsArbeiten reflektierend, beansprucht die WO 2014/187972 die Verwendung fluorfreier, hochverzweigter Polyalkoxysiloxane zur Herstellung schmutzabweisender Oberflächenbeschichtungen mit einem Verzweigungsgrad von VG > 0,4 gemäß einer komplizierten Berechnungsformel unter Einbeziehung der ²⁹Si-NMR-Spektroskopie. Das hochverzweigte Polyalkoxysiloxan wird mit Tetraethoxysilan, Essigsäureanhydrid und Tetrakis(trimethylsiloxy)titan oder mit Dynasylan^{®}40, Essigsäureanhydrid und Titan-4-Isopropoxid oder mit Dynasylan^{®}40, Essigsäureanhydrid und α-n-Butyl-ω-trimethoxysilyl-ethyl-polydimethylsiloxan hergestellt

Nicht auf Polyalkoxysiloxane abstellend, zielt die Lehre der WO 2019/200579 auf eine Polysiloxan-Zusammensetzung zur Herstellung eines bei Raumtemperatur vernetzenden, nicht korrosiven Elastomers, das ein hydroxyl-terminiertes Polyorganosiloxan, ein Diacetoxysilan, ein multi-funktionelles Alkoxysilan, sowie einen Füllstoff und einen Katalysator enthält.

Die WO 2012/040305 offenbart eine härtbare Zusammensetzung enthaltend Organosiloxanblockcopolymere mit einem gewichtsmittleren Molekulargewicht M_{w} über 20.000 g/mol, wobei diese durch die Umsetzung von silanolgruppentragenden Organosiloxanharzen (Komponente b) mit linearen geminalen diacetoxysubstituierten Organosiloxanen (Komponente a) generiert werden. "Geminale diacetoxysubstituiert" bedeutet hierbei, dass das Organosiloxan endständig an einem Si-Atom zwei benachbarte Acetoxygruppen [-Si-(OAc)₂] aufweist. Diese geminalen diacetoxysubstituierten Organosiloxane werden durch die Reaktion von silanolterminierten Polydiorganosiloxanen mit Alkyltriacetoxysilanen hergestellt. Somit führt dieses Verfahren zu multiplen Vernetzungen um das Zentrum des eingesetzten Acetoxysilans. Bei diesem Verfahren muss die dabei entstandene Essigsäure aus dem System entfernt werden. Die Abtrennung der freigesetzten Essigsäure ist schwierig, da sie Wasserstoffbrückenbindungen aufbaut, die deren thermisches Auskreisen behindern. Die Sicherstellung der Säurefreiheit (und Wasserfreiheit) im linearen Organosiloxanblockcopolymer ist essentiell, denn sonst ist dessen Einsetzbarkeit auf säureempfindlichen Substraten nicht gegeben. Zur Herstellung wird außerdem ein Lösemittel benötigt, da die verwendeten Edukte bzw. Silsesquioxane fest sind.

Die Aufgabe der vorliegenden Erfindung ist daher die Bereitstellung von Verbindungen, die zur Herstellung von Beschichtungssystemen geeignet sind, wobei diese eine verbesserte antiadhäsive Wirkung aufweisen, ohne dass die übrigen Eigenschaften signifikant beeinträchtigt werden und die im Stand der Technik genannten Nachteile nicht aufweisen.

Zur Lösung der Aufgabe werden Kondensationsverbindungen eingangs genannter Art vorgeschlagen, welche durch die Umsetzung von
- endäquilibrierten Acetoxygruppentragenden Siloxanen gemäß Formel (I) und/oder Formel (II): 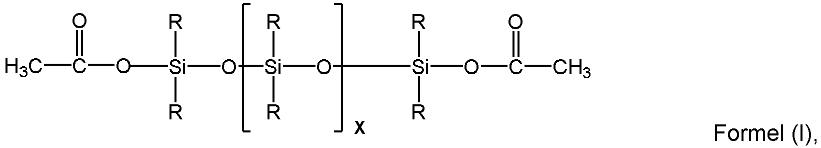 wobei R = ein Alkylrest mit 1 bis 4 Kohlenstoffatomen und/oder Phenylrest, bevorzugt R = Methylrest und 1 ≤ x ≤ 500, bevorzugt 3 ≤ x ≤ 100, besonders bevorzugt 5 ≤ x ≤ 40 ist,
   oder 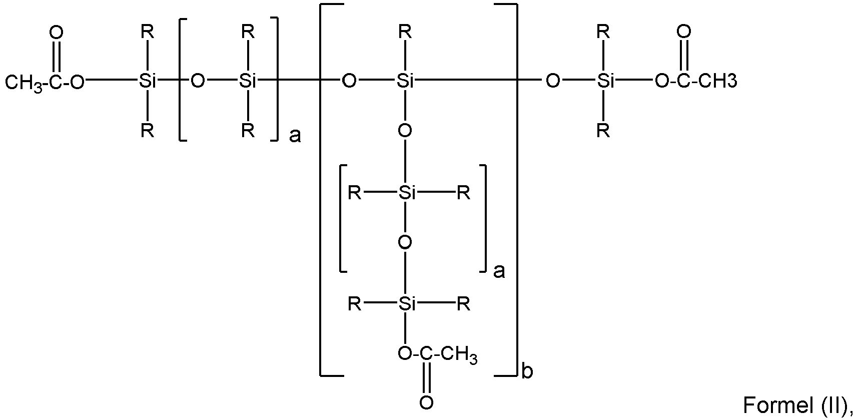 wobei 0 ≤ a ≤ 100 und 1 ≤ b ≤ 10, bevorzugt mit 2 ≤ a ≤ 30 und 1 ≤ b ≤ 6, besonders bevorzugt mit 3 ≤ a ≤ 10 und 2 ≤ b ≤ 5 sind,
- mit mindestens einem alkoxyfunktionellen Polysiloxan gemäß der Formel (III)

   R¹_{c}Si(OR²)_{d}O_{(4-c-d)/2} Formel (III)

   worin c größer gleich 0 bis kleiner gleich 2 und d größer gleich 0 bis kleiner gleich 4 sind und die Summe von c + d kleiner 4 ist,
   R¹ unabhängig voneinander, gleich oder verschieden lineare oder verzweigte, gesättigte wie auch ein oder mehrfach ungesättigte oder aromatische Kohlenwasserstoffreste, und
   R² eine Alkylgruppe bestehend aus 1 bis 8 Kohlenstoffatomen, bevorzugt eine Methyl- oder Ethylgruppe, ist
- in Gegenwart eines Katalysators,
erhältlich sind.

Es hat sich herausgestellt, dass die erfindungsgemäßen härtbaren Kondensationsverbindungen zur Herstellung von Beschichtungssystemen mit anti-adhäsiver Eigenschaft, insbesondere mit Anti-Graffiti-Wirkung, verwendet werden können. Zudem weisen die daraus hergestellten Beschichtungen überraschend ein bessere Gleitfähigkeit auf als üblichen Beschichtungen.

Es wurde in den Versuchen festgestellt, dass die mit der erfindungsgemäßen härtbaren Kondensationsverbindungen hergestellten Beschichtungen Schmutzanhaftungen jeglicher Art verhindern oder reduzieren und keine Beeinträchtigung sonstiger Eigenschaften aufzeigen.

Die verschiedenen Fragmente der in der Formel (I) bis Formel (III) angegebenen Siloxanketten können statistisch verteilt sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden.

Die hier wiedergegebenen Indexzahlen und die Wertbereiche der angegebenen Indizes können als Mittelwerte der möglichen statistischen Verteilung der tatsächlichen vorhandenen Strukturen und/oder deren Mischungen verstanden werden.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Bei Prozentangaben handelt es sich, wenn nicht anders angegeben, um Angaben in Gewichtsprozent.

Sind nachfolgend Messwerte angegeben, so sind diese Messungen, wenn nicht anders angegeben, bei Normalbedingungen (25 °C und 1013 mbar) durchgeführt worden.

Werden nachfolgend Mittelwerte angegeben, so handelt es sich, wenn nicht anderes angegeben, um Gewichtsmittel.

Besonders geeignete endäquilibrierte Acetoxygruppentragenden Siloxane gemäß Formel (I) und/oder Formel (II) und deren Herstellung sind aus dem Stand der Technik bekannt. Demnach ist es z.B. möglich, zu einem terminalen Acetoxygruppen tragenden, linearen oder verzweigten Polysiloxan zu gelangen, indem man ein terminale Alkoxygruppen tragendes, lineares Polysilikonäquilibrat (=Voräquilibrat) als alleiniger Reaktand mit einem Reaktionsmedium bestehend aus Essigsäureanhydrid, Trifluormethansulfonsäure und Essigsäure zur Umsetzung bringt.

Zahlreiche Syntheseverfahren sind dem Fachmann bekannt. Es sei hier einige zu nennen, die auch Bestandteile dieser Erfindung sein sollen:
Es ist vorstellbar, trifluormethansulfonsaure, äquilibrierte Acetoxysiloxane des linearen bzw. auch des verzweigten Strukturtyps gemäß der Formel (I) oder Formel (II) einzusetzen, deren Herstellung aus der Lehre der europäischen Patentanmeldung EP 3611215A1 zu entnehmen ist, gemäß der man zyklische Siloxane, insbesondere umfassend D4 und/oder D5, und/oder Mischungen zyklisch-verzweigter Siloxane vom D/T-Typ unter Einsatz von Trifluormethansulfonsäure als Katalysator mit Acetanhydrid und unter Zusatz von Essigsäure umsetzt.

Die europäischen Patentanmeldungen mit Anmeldeaktenzeichen EP 18189072.4, EP18189075.7 und EP 18189074.0 stellen auf Verfahren zur Herstellung von Acetoxymodifizierten Siloxanen ab, bei denen DT-Siloxanzyklen respektive einfache, nur D-Einheiten enthaltende Siloxanzyklen als Edukte eingesetzt werden.

Keine verzweigten, sondern lineare SiOC-verknüpfte Silikonpolyetherstrukturen anstrebend, führen die europäischen Patentanmeldungen mit Anmeldeaktenzeichen EP 18189072.4 und EP 18189074.0 hierzu aus, dass äquilibrierte α,ω-Diacetoxy-polydimethylsiloxane durch die Umsetzung von Siloxanzyklen (D4/D5) mit Acetanhydrid in Gegenwart von Trifluormethansulfonsäure hergestellt werden, indem man unter guter Durchmischung der Reaktanden diese mit 0,1 bis 0,3 Massenprozent Trifluormethansulfonsäure bezogen auf die gesamte Reaktionsmasse beaufschlägt und dann auf Temperaturen von 140 bis 160°C für die Dauer von 4 bis 8 Stunden erhitzt. Hierbei wird aus der anfänglich leicht trüben Reaktionsmischung ein klares, äquilibriertes Trifluormethansulfonsäure katalysiertes α,ω-Diacetoxy-polydimethylsiloxan erhalten, das neben eingesetzter Trifluormethansulfonsäure auch 0,125 Mol freien Acetanhydrids bezogen auf das im α,ω-Diacetoxy-polydimethylsiloxan chemisch gebundene Acetanhydrid-Äquivalent, enthält.

Die Europäische Patentanmeldung mit Anmeldenummer EP18210035.4 beschreibt (i) Reaktionssysteme zur Herstellung Acetoxyfunktionen tragender Siloxane, umfassend a) Alkoxygruppen tragende Silane und/oder Siloxane und/oder b) Acetoxygruppen tragende Silane und/oder Siloxane, c) Hydroxygruppen tragende Silane und/oder Siloxane c) ggf. einfache Siloxanzyklen und/oder DT-Zyklen, d) ein Reaktionsmedium, umfassend Essigsäureanhydrid, Perfluoralkansulfonsäure sowie vorzugsweise Essigsäure, (ii) ein Verfahren zur Herstellung linearer oder verzweigter Acetoxyfunktionen tragender Siloxane.

Die erfindungsgemäß einzusetzenden, mit terminalen Acetoxygruppen versehenen, verzweigten Siloxane sind beispielsweise zugänglich nach Verfahren, die in den noch nicht veröffentlichten Patentanmeldungen mit Anmeldenummer EP 19176875.3 bzw. EP 19176874.6 beschrieben ist und ausgehen von zyklischen-verzweigten Siloxanen vom D/T-Typ, die in einem ersten Schritt säurekatalysiert mit Acetanhydrid gegebenenfalls in Abmischung mit einfachen Siloxanzyklen und/oder Hydroxygruppen tragenden Siloxanen und/oder Acetoxy- und/oder Alkoxygruppen-tragenden Silanen und/oder Siloxanen zu Acetoxygruppen-tragenden, verzweigten Siloxanen umgesetzt werden, die dann in einem zweiten Schritt mit Säuren, vorzugsweise Supersäuren, insbesondere unter Zusatz von Essigsäure äquilibriert werden, wobei es sich bei den zyklischen-verzweigten Siloxanen vom D/T-Typ um Mischungen zyklischer-verzweigter Siloxane vom D/T-Typ handelt, die neben D- und T-Einheiten aufweisenden Siloxanen ggf. auch Siloxane mit Q-Einheiten enthalten, mit der Maßgabe, dass bei diesen Mischungen der Anteil an Si-Atomen stammend aus Q-Einheiten ≤ 10 Massen-% bis ≥ 0 Massenprozent-%, bevorzugt ≤ 5 Massen-% bis ≥ 0 Massenprozent-%, bezogen auf die Gesamtheit aller Si-Atome ausmacht, wobei die Anmeldeschrift EP 19176875.3 noch die Maßgabe enthält, dass für den Fall, dass die eingesetzten zyklischen-verzweigten Siloxanen vom D/T-Typ Mischungen zyklischer-verzweigter Siloxane vom D/T-Typ sind, die keine Siloxane mit Q-Einheiten enthalten, die in Schritt 1 und/oder 2 eingesetzte Säure(n) nicht allein Trifluormethansulfonsäure oder nicht allein Trifluormethansulfonsäure und Essigsäure sind.

Vorzugsweise weisen die endäquilibrierten acetoxygruppentragenden Siloxane gemäß Formel (I) ausschließlich D-Einheiten auf.

Vorzugsweise werden endäquilibrierte α,ω-Acetoxygruppen tragende, lineare Polydimethylsiloxane für die Umsetzung eingesetzt.

Bevorzugt werden endäquilibrierte Acetoxygruppen tragende Siloxane gemäß Formel (I) und/oder Formel (II) neutralisiert.

Die Neutralisation der Brönstedt-sauren, insbesondere trifluormethansulfonsauren Acetoxysiloxane ist in der Patentanmeldung mit Anmeldenummer EP 19176868.8 beschrieben. Hierzu versetzt man das zu neutralisierende Acetoxysiloxan mit einer mindestens zur Neutralisation der darin enthaltenden Brönstedtsäure, insbesondere Trifluormethansulfonsäure ausreichenden Menge einer festen und/ oder flüssigen und/ oder gasförmigen Base und trennt das neutralisierte Acetoxysiloxan vom gebildeten Salz ab. Zur Sicherstellung der Neutralisation setzt man vorzugsweise die zur Neutralisation verwendete Base in einem stöchiometrischen Überschuss bezogen auf das zu neutralisierende Säureäquivalent ein.

Acetoxysiloxane und Acetoxygruppen tragene Siloxane werden hierbei als Synonyme verwendet.

Geeignete alkoxyfunktionelle Polysiloxane gemäß der Formel (III) werden häufig auch als Silikonharze bezeichnet. Bei dieser Formel handelt es sich um die kleinste Einheit der gemittelten Strukturformel des Silikonpolymers. Die Anzahl der Wiederholungen ergibt sich aus dem über GPC bestimmten Zahlenmittel Mn.

Die Herstellung von derartigen Silikonharzen ist der Literatur lange bekannt (siehe hierzu in W. Noll - Chemie und Technologie der Silicone, Wiley-VCH Verlag GmbH & Co. KGaA, Weinheim, 1960) und wird auch in der deutschen Patentschrift DE 34 12 648 beschrieben.

Bevorzugt sind die Reste R¹ unabhängig voneinander gesättigte, verzweigte oder unverzweigte Alkylreste mit 1 bis 17 Kohlenstoffatomen und/oder ein- oder mehrfach ungesättigte, verzweigte oder unverzweigte Alkenylreste mit 2 bis 17 Kohlenstoffatomen oder aromatische Gruppen mit 6 bis 12 Kohlenstoffatomen. Besonders bevorzugt weisen die Alkyl- und Alkenylreste bis zu 12, weiter bevorzugt bis zu 8 Kohlenstoffatome auf. Auch besonders bevorzugt sind alle Reste R¹ gleich Methyl und/oder Phenyl.

Bevorzugt sind die Reste R² unabhängig voneinander gesättigte, verzweigte oder unverzweigte Alkylreste mit 1 bis 8 Kohlenstoffatomen. Vorzugsweise ist R² ausgewählt aus Methyl- oder Ethylgruppen. Letztere eignen sich besonders für als HAPS-free (Hazardous Air Pollutant Substance) bezeichnete Phenylpolysiloxane oder Phenyl-Alkylpolysiloxane, die weder Lösemittel wie Toluol, Xylol oder Benzol enthalten und außerdem bei der bei Raumtemperatur stattfindenden katalytischen Hydrolyse-Kondensations-Vernetzung kein Methanol freisetzen, sondern nur Ethanol.

Bevorzugte Verbindungen der allgemeinen Formel (III) weisen als Rest R² Methyl- und/oder Ethylgruppen auf mit 3 bis 50 Gew.-% Alkoxyfunktionalität, bevorzugt 5 bis 40 Gew.-%, und besonders bevorzugt 7 bis 30 Gew.-%, bezogen auf die Gesamtmasse der Verbindung.

Das gewichtsmittlere Molekulargewicht M_{w} der Verbindung der allgemeinen Formel (III) ist bevorzugt 200 bis 20.000 g/mol, besonders bevorzugt 200 bis 10.000 g/mol, weiter bevorzugt 300 bis 3.000 g/mol oder besonders bevorzugt 400 bis 2.000 g/mol.

Für die erfindungsgemäße Umsetzung spielt die Alkoxyfunktionalität der Polysiloxane der allgemeinen Formel (III) eine große Rolle.

Alkoxyfunktionell im Sinne der vorliegenden Erfindung bedeutet, dass im Polysiloxan Alkylgruppen über Sauerstoff an Silicium gebunden vorliegen. Vorzugsweise bedeutet alkoxyfunktionell die Anwesenheit von Si-O-R-Gruppen. Die Alkoxyfunktionalität gibt den Massenanteil der Alkoxygruppen bezogen auf das Polysiloxan an.

Es sei hier angemerkt, dass sich die Verwendung von alkoxyfunktionellen Polysiloxanen der Formel (III) als vorteilhaft erweist gegenüber dem Einsatz der im Stand der Technik aufgeführten Silanole. Die Lagerstabilität =SiOH-Gruppen-tragender Siloxane ist sehr begrenzt, insbesondere unter dem Einfluss ubiquitär immer vorhandener Spuren von Säuren oder Basen. Darüber hinaus sind die typischerweise für Beschichtungssysteme verwendeten silanolfunktionellen Polysiloxane in der Regel fest und benötigen zu ihrer Verarbeitung stets ein Lösungsmittel, um sie entweder weiter zu funktionalisieren oder aber zu applizieren. Einmal auf ein Substrat aufgetragen sind Silanolgruppen tragende Polysiloxane im Vergleich zu Alkoxygruppen tragenden Systemen weniger reaktiv, und brauchen hohe Temperaturen damit eine Quervernetzung stattfindet. Somit können silanolfunktionelle Polysiloxanen auf temperaturempfindlichen Substraten nicht zum Einsatz kommen. Für Außenanwendungen auf nicht-beheizbaren Substraten, wie zum Beispiel für eine Anti-Graffiti-Beschichtung, sind silanolfunktionelle Polysiloxane deshalb ungeeignet.

Bevorzugt sind die Polysiloxane der allgemeinen Formel (III) mit R¹ gleich Methyl, sogenannte Methylsilikonharze, mit einer Alkoxyfunktionalität von 7 bis 35 Gew.-% bezogen auf die Gesamtmasse der Polysiloxane und einer gewichtsmittleren Molmasse von 300 bis 2.000 g/mol.

Auch bevorzugt sind die Polysiloxane der allgemeinen Formel (III) mit R¹ gleich Phenyl, sogenannte Phenylharze. Sie weisen bevorzugt einen Anteil der Alkoxygruppen von 1 - 40 Gew.-%, bezogen auf das Polysiloxan auf, besonders bevorzugt 3 - 35 Gew.-%, und ganz besonders bevorzugt 5 - 30 Gew.-%.

Weiterhin bevorzugt beträgt das gewichtsmittlere Molekulargewicht Mw der Phenylharze 200 bis 10.000 g/mol, bevorzugt 200 bis 3.000 g/mol, besonders bevorzugt 300 bis 2.000 g/mol.

Besonders bevorzugt beträgt das gewichtsmittlere Molekulargewicht Mw der Phenylharze 700 bis 2.000 g/mol.

In einer weiteren Ausführungsform sind die Polysiloxane der allgemeinen Formel (III) mit R¹ gleich Phenyl- und Methylgruppen bevorzugt, sogenannte Methyl-Phenylharze.

Besonders bevorzugte Methyl-Phenylharze weisen als Alkoxygruppen Methoxy- und/oder Ethoxy-Gruppen auf, wobei der Anteil der Alkoxygruppen, insbesondere der Methoxy- bzw. Ethoxy-gruppen, mindestens 1 Gew.-%, bezogen auf das Polysiloxan, vorzugsweise 2 bis 40 Gew.-%, besonders bevorzugt 3 bis 35 Gew.-%, und ganz besonders bevorzugt 5 bis 30 Gew.-% beträgt.

Das numerische auf die Molzahl im Harz bezogene Phenyl- zu Methyl-Verhältnis liegt bevorzugt im Bereich von 1 zu 0,1 bis 0,1 zu 1, vorzugsweise im Bereich von 0,5 zu 1 bis 1 zu 0,5.

Werden in der vorliegenden Erfindung chemische (Summen-)Formeln verwendet, so können die angegebenen Indizes sowohl absolute Zahlen als auch Mittelwerte darstellen.

Bei polymeren Verbindungen stellen die Indizes vorzugsweise Mittelwerte dar.

Bei Prozentangaben handelt es sich, wenn nicht anders angegeben, um Angaben in Gewichtsprozent.

Sind nachfolgend Messwerte angegeben, so sind diese Messungen, wenn nicht anders angegeben, bei Normalbedingungen (25 °C und 1013 mbar) durchgeführt worden.

Werden nachfolgend Mittelwerte angegeben, so handelt es sich, wenn nicht anderes angegeben, um Gewichtsmittel.

Bevorzugt wird zur Herstellung der erfindungsgemäßen Kondensationsverbindungen ein Katalysator ausgewählt aus Zinndiacetat, Zinndioctoat, Dibutylzinndiacetylacetonat, Dibutylzinndilaurat, Zinntetraacetat, Dibutylzinndiacetat, Dibutylzinndioctoat, Dibutylzinndioleat, Dioctylzinndilaurat, Dioctylzinndineodecanoat, Dimethoxydibutylzinn, Dimetylzinn, Dibutylzinnbenzylmaleat, Bis-(triethoxysiloxy)dibutylzinn, Diphenylzinndiacetat, Tetraethoxy-titan, Tetra-n-propoxy-titan, Tetra-i-propoxy-titan, Tetra-n-butoxytitan, Tetra-i-butoxytitan, Tetrakis-(2-ethylhexoxy)titan, Di-i-propoxy-bis(ethylacetoacetat)titan, Dipropoxy-bis-(acetylacetonat)-titan, Di-i-propoxy-bis-(acetylacetonat)-titan, Dibutoxy-bis-(acetylacetonat)-titan, Tri-i-acetat-propoxyallyltitan, Isopropoxyoctylenglycol- oder Bis(acetylacetonat)-titanoxid, Bleidiacetat, Blei-di-2-ethylhexanoat, Blei-dineodecanoat, Bleitetraacetat, Bleitetrapropionat, Zinkacetylacetonat, Zink-2-ethylcaproat, Zink-diacetat, Bis-(2-Ethylhexansäure)-Zink, Zinkdineodecanoat, Zinkdiundecenoat, Zinkdimethacrylat, Tetrakis-(2-Ethylhexansäure)-zirkoniumdichlorid, Tetrakis-(Methacrylsäure)-zirkoniumdichlorid, Kobaltdiacetat, Bismutcarboxylate und Bismuttriflat, Des Weiteren können auch Eisen(II)- und Eisen(III)-Verbindungen, z. B. Eisen(III)-acetylacetonat oder Eisen(II)-acetat, Aluminiumverbindungen, z. B. Aluminiumacetylacetonat, Calcium-verbindungen, z.B. Calciumethylendiamintetraacetat, Magnesiumverbindungen, z. B. Magnesiumethylendiamintetraacetat als Katalysatoren eingesetzt werden.

Es ist auch vorstellbar, Perfluoralkansulfonsäure, wie beispielweise Trifluormethansulfonsäure oder Perfluorbutansulfonsäure, als Katalysator einzusetzen.

Bevorzugt kann ein erfindungsgemäßer Katalysator, der im Weiteren näher beschrieben und erläutert wird, eingesetzt werden.

Vorzugsweise ist bei der Umsetzung mindestens ein Vernetzer gemäß Formel (IV)

R³ₑSi(OR⁴)_{f} Formel (IV)

worin e größer gleich 0 bis kleiner gleich 2 ist, f größer gleich 2 bis kleiner gleich 4 und die Summe von e + f gleich 4 ist,
R³ = eine gesättigte oder ungesättigte Alkylgruppe bestehend aus 1 bis 8 Kohlenstoffatomen, oder eine organische Gruppierung bestehend aus 1 bis 8 Kohlenstoffatomen und 1 bis 2 Stickstoffatomen oder eine aromatische Gruppierung mit 6 bis 20 Kohlenstoffatomen und
R⁴ = eine Alkyl- oder Acylgruppe bestehend aus 1 bis 8 Kohlenstoffatomen ist,
zugegen.

Alkylgruppen sind bevorzugt Methyl-, Ethyl-, Propyl-, Isopropyl-, n-Butyl-, s-Butyl-, t-Butyl-gruppen. Die aromatische Gruppierung ist bevorzugt eine Phenyl-Gruppierung. Bevorzugte Substituenten R³ sind Methyl- oder Phenyl- bzw. Mischungen aus Methyl- und Phenyl-Resten. Bevorzugte Alkylgruppen des Restes R⁴ sind Methyl-, Ethyl-, Propyl-, Isopropyl-, n-Butyl-, s-Butyl-, t-Butyl-Gruppen.

Bevorzugt wird der Vernetzer ausgewählt aus Methyltriacetoxysilan, Ethyltriacetoxysilan, Dimethyldiacetoxysilan, Methyltrimethoxysilan, Methyltriethoxysilan, Vinyltrimethoxysilan, Vinyltriethoxysilan, Tetramethoxysilan, Tetraethoxysilan, Phenyltriethoxysilan, Phenyltrimethoxysilan, Propyltrimethoxysilan, Propyltriethoxysilan, Dimethyldimethoxysilan, Dimethyldiethoxysilan, Dimethoxyphenylmethylsilan und Diethoxyphenylmethylsilan.

Vorteilhafterweise ist es daher mit dem erfindungsgemäßen Verfahren möglich, den Verzweigungsgrad der Kondensationsverbindungen zu erhöhen, indem man
a) verzweigtes Acetoxysiloxan und/oder
b) einen verzweigenden Vernetzer der Reaktionsmatrix,
hinzufügt.

Des Weiteren besteht erfindungsgemäß eine nachgeschaltete Vernetzungsmöglichkeit mit einhergehenden Molmassenaufbau, indem man die verzweigten Kondensationsverbindungen mit zusätzlichen Acetoxysiloxanen zur Reaktion bringt.

Die Begriffe "Siloxane" und "Polysiloxane", ungeachtet als Wortbestandteil oder alleinstehend, werden als Synonyme in der vorliegenden Erfindung verstanden.

Vorzugsweise enthalten die erfindungsgemäßen härtbaren Kondensationsverbindungen den Vernetzer in Mengen von 0 bis 20 Gew.-%, bevorzugt 0 bis 10 Gew.-% und besonders bevorzugt mit 0 bis 5 Gew.-% bezogen auf die gesamte Masse der härtbaren Kondensationsverbindungen.

Wünschenswert ist es des Weiteren auch, ein Verfahren bereitzustellen, mit dem härtbare Kondensationsverbindungen auf Basis von alkoxyfunktionelle Polysiloxane einfach und ohne die aus dem Stand der Technik bekannte Nachteile herstellen lassen.

Überraschenderweise wurde nun gefunden, dass man sowohl unter Verzicht auf den eingangs erwähnten Einsatz von Organochlorsilanen als auch unter Verzicht auf schwierig steuerbare Alkoholyse/Hydrolyse-Vorgänge einfach und eindeutig zu härtbaren Kondensationsverbindungen auf Basis von alkoxyfunktionellen, =Si-OH-gruppen freien Polysiloxanen gelangt, indem man endäquilibrierte acetoxygruppentragende Siloxane gemäß Formel (I) und/oder Formel (II) mit mindestens einem alkoxyfunktionellen Polysiloxan gemäß der Formel (III) in Gegenwart eines Katalysators zur Reaktion bringt.

Bevorzugt beträgt das Verhältnis von acetoxygruppentragenden Siloxanen gemäß Formel (I) und/oder Formel (II) zu alkoxyfunktionellen Polysiloxanen gemäß Formel (III) 1 Gew.-% zu 99 Gew.-%, bis 99 Gew.-% zu 1 Gew.-%, bevorzugt 3 Gew.-% zu 97 Gew.-% bis 50 Gew.-% zu 50 Gew.-%, und besonderes bevorzugt 5 Gew.-% zu 95 Gew.-% bis 30 Gew.-% zu 70 Gew.-%, bezogen auf die Gesamtsilikonmatrix.

Es können alle üblichen Katalysatoren eingesetzt werden. Bevorzugte Katalysatoren sind oben beschrieben.

Weiterhin wurde überraschenderweise gefunden, dass man das erfindungsgemäße Verfahren ganz besonders bevorzugt in Gegenwart eines Silikonmatrix kompatiblen Katalysators durchführt, den man beispielsweise vor Beginn der zu katalysierenden Kondensationsreaktion dadurch gewinnt, dass man Titanalkoholate mit Essigsäureanhydrid oder aber Titanalkoholate mit Acetoxysiloxanen zur Umsetzung bringt.

Reaktionsmatrix und Gesamtsilikonmatrix werden hier als Synonyme verwendet, die im Wesentlichen aus Verbindungen der Formel (I) oder (II) und Verbindungen der Formel (III) zusammensetzt.

Insbesondere kann der erfindungsgemäß aus der Reaktion von Titanalkoholaten mit Acetoxysiloxan hervorgehende Katalysator auch bevorzugt in situ hergestellt werden.

Somit stellt die Herstellung des neuartigen Katalysators einen weiteren Gegenstand der Erfindung dar. Der erfindungsgemäße Katalysator kann bevorzugt aus Titanalkoholaten mit Essigsäureanhydrid oder aus Titanalkoholaten mit Acetoxysiloxanen hergestellt werden. Besonders bevorzugt kann man den erfindungsgemäßen Katalysator aus Titanalkoholaten und Acetoxysiloxan in situ, d.h. während der Umsetzung von Verbindungen der Formel (I) oder (II) mit Verbindungen der Formel (III), herstellen.

Der aus der Reaktion von Titanalkoholaten mit Acetoxysiloxanen hervorgehende Katalysator besitzt eine hervorragende Kompatibilität mit der Reaktionsmatrix und gestattet sowohl die zeitadäquat-zügige Reaktion von Alkoxypolysiloxanen mit Acetoxysiloxanen als auch die Aushärtung der hieraus hervorgehenden härtbaren Kondensationsverbindungen an gewöhnlicher Atmosphäre.

Gemäß einer bevorzugten Ausgestaltungsvariante können erfindungsgemäß zunächst Acetoxysiloxan und alkoxyfunktionelles Polysiloxan vorvermischt und dann mit Titanalkoholat und/oder besonders bevorzugt mit dem aus der Reaktion von Acetoxysiloxan mit Titanalkoholat hervorgegangenen Kondensations-Katalysator beaufschlagt werden.

Alternativ bevorzugt kann erfindungsgemäß der Silikonmatrix kompatible Kondensationskatalysator durch Vermischen und Vorreaktion von Acetoxysiloxan mit Titanalkoholat hergestellt werden. Durch Hinzufügen des alkoxyfunktionellen Polysiloxans entsteht dann die kondensationsfähige Reaktionsmatrix.

Im Rahmen vorliegender Erfindung wird die Kompatibilität des Kondensationskatalysators an Hand des Auftretens bzw. Nichtauftretens von Trübungen nach Einbringen desselben in die bzw. nach dessen in-situ-Bildung in der Reaktionsmatrix festgemacht. Wird ein zu diesem Zweck aus der Reaktionsmatrix entnommenes Volumen-Aliquot in eine 10 mm dicke Glasküvette eingebracht und lässt sich dann ein unmittelbar dahinter liegender Text (schwarz geschrieben in der Größe Arial 12 auf weißem Papier) bei Tages- und/ oder Kunstlicht unverzerrt lesen, so gilt die Reaktionsmatrix als trübungsfrei und der Kondensationskatalysator als erfindungsgemäß kompatibel.

In einer weiteren, bevorzugten erfindungsgemäßen Ausgestaltung werden Acetoxysiloxan, Alkoxypolysiloxan und Titanalkoholat unter intensiver Durchmischung zur Reaktion gebracht.

Erfindungsgemäß können alle genannten Katalysatoren in Mengen von 0,01 bis 10,0 Gew.-%, bevorzugt von 0,05 bis 7,5 Gew.-%, besonders bevorzugt 0,1 bis 5,0 Gew.-% bezogen auf die aus Alkoxypolysiloxan und Acetoxysiloxan bestehende Reaktionsmatrix eingesetzt werden.

Die für das erfindungsgemäße Verfahren verwendeten alkoxyfunktionellen Polysiloxanen gemäß Formel (III) und endäquilibrierten Acetoxygruppentragenden Siloxanen gemäß Formel (I) und/oder Formel (II) inklusive deren bevorzugten Ausführungsformen sind oben näher beschrieben.

Erfindungsgemäß kann man bevorzugt zur Vervollständigung der Kondensationsreaktion während der Umsetzung den aus dem Rest R² und der Acetoxygruppe gebildeten Essigsäureester entfernen. Die Entfernung des aus der Reaktionsmatrix freigesetzten Essigsäureesters kann bei Normaldruck oder besonders bevorzugt bei Unterdruck, das heißt, unter Anlegen eines Hilfsvakuums erfolgen. Weitere Möglichkeiten sind dem Fachmann bekannt.

Erfindungsgemäß kann man bevorzugt die Kondensationsreaktion von alkoxyfunktionellen Polysiloxanen mit Acetoxysiloxanen wahlweise in Substanz, das heißt, ohne Einsatz von Lösungsmitteln, jedoch auch in Lösung durchführen. Als Lösungsmittel eignen sich beispielsweise Aromaten, Alkylaromaten aber auch aliphatische Kohlenwasserstoffe.

Bevorzugt werden Lösungsmittel eingesetzt, die einen Siedepunkt aufweisen, der höher liegt, als der Siedepunkt des aus der Kondensationsreaktion freigesetzten Essigsäureesters, gebildet aus dem Rest R² und der Acetoxygruppe.

Kondensationsreaktion und Umsetzung werden hierbei als Synonyme verwendet.

Bevorzugt wird ein Vernetzer der Formel (IV) eingesetzt. Bevorzugte Vernetzerverbindungen sind oben beschrieben.

Es ist vorstellbar, dass der Vernetzer als Mischung bestehend aus mindestens zwei Vernetzern verwendet wird. Als Beispiel kann eine Mischung aus Phenyltrimethoxysilan und Methyl-Phenyl-Dimethoxysilan als Monomerblend im Sinne der vorliegenden Erfindung verwendet werden.

Die ²⁹Si-NMR-Spektroskopie (gemessen an einem Avance III 400 Spektrometers der Fa. Bruker. mit einem PA BBO 400Si BB-H-D-10 z Probenkopf der Firma Bruker, bei einer Frequenz von 79,495 MHz, einer Messzeit von 2,569 Sekunden pro Scan und bei 512 Scans pro Spektrum), ergänzt um die GPC, kann zur Reaktionsverfolgung herangezogen werden. Besonders die ²⁹Si-NMR-Spektroskopie ermöglicht über die Verfolgung des charakteristischen Signals für die Si-Acetoxygruppierung die Umsatzkontrolle.

Das Verschwinden des für Acetoxysiloxane typischen ²⁹Si-NMR-Signals bei -9 ppm als verlässlichen Indikator für eine vollständige Umsetzung nehmend, beispielsweise erreichen die in den Beispielen gezeigten erfindungsgemäßen Reaktionsansätze nach 1 bis 3 Stunden quantitativen Umsatz.

Die erfindungsgemäß gewonnenen härtbaren Kondensationsverbindungen besitzen den großen Vorteil, dass sie keinerlei Anteile =Si-OH-Gruppen tragender Siloxane enthalten. Die insbesondere von der erhöhten Präsenz von =Si-OH-Gruppen in alkoxyfunktionellen Polysiloxanen ausgehenden Defizite sind bereits beispielsweise hinlänglich in der WO 2014/187972 und dort speziell für hyperverzweigte Polyalkoxysilan Additive bezugnehmend auf den Aspekt deren mangelnden Lagerstabilität (S. 8,) als auch in der Patentschrift EP 0771835 B1 im Sinne ihrer mangelnder Lagerstabilität (S. 4, Zeilen 29-30) und in der EP 0964020 B1 bezugnehmend auf die unzureichende Fleckbeständigkeit bei Verarbeitung des alkoxyfunktionellen Polysiloxans in einer Beschichtungsmasse (S. 3, [0026]) diskutiert.

Die erfindungsgemäß härtbaren Kondensationsverbindungen sind vorzugsweise klare bis leicht trübe Flüssigkeiten, die gegenüber den eingesetzten Ausgangsmaterialien (Formel (I), (II) und Formel (III)) einen deutlichen Molmassenaufbau aufweisen, den man leicht mit Hilfe der GPC-Analytik nachvollziehen kann.

Es wurde auch festgestellt, dass die erfindungsgemäßen härtbaren Kondensationsverbindungen aufgrund im System verbliebener Katalysatorkomponente einen gewissen Selbsthärtungscharakter ("1-K-Charakter") besitzen.

Sollten darüber hinaus noch schnellere An- und Durchtrocknungszeiten gewünscht sein, empfiehlt sich die Zugabe weiterer Härtungskatalysatoren. Übliche Härtungskatalysatoren sind dem Fachmann bekannt. Beispielsweise werden hier einige aufgeführt: 3-Aminopropyltriethoxsilan, 3-Aminopropyltrimethoxysilan, Tetra(i-Propyl)titanat, Tetra(n-Butyl)titanat, 1,1,3,3-Tetramethylguanidin, 1,8-Diazabicyclo[5.4.0]undec-7-ene, 1,5-Diazabicyclo[4.3.0]non-5-ene und Dioctylzinndilaurat.

Ein weiteres Ziel der vorliegenden Erfindung bestand darin, Beschichtungsmittel mit Antigraffiti-Wirkung zur Verfügung zu stellen, die die Eigenschaften des Substrats nicht ungünstig verändern. So sollen die zur Herstellung von Graffiti verwendeten Lacke oder Farben durch eine erfindungsgemäße Beschichtung mit Anti-Graffiti-Wirkung nicht mehr oder nur sehr schwach auf dem Substrat haften, wobei besprühte Substrate leicht zu reinigen sein sollten, so dass z.B. Wasser, Lappen, Tenside, Hochdruckreiniger, milde Lösemittel ("Easyto-clean") genügen. Eine aufwendige Reinigungsprozedur, wie aus dem Stand der Technik bekannt, soll weitestgehend vermieden werden.

Völlig überraschend konnte festgestellt werden, dass die erfindungsgemäßen Beschichtungen mehrere Reinigungszyklen überstehen, ohne dass sie beispielsweise ihre Anti-Graffiti-Wirkung verlieren. Somit sind die erfindungsgemäßen Beschichtungen in ihrer technischen Lebensdauer gegenüber denen aus dem Stand der Technik weit überlegen. Der Anwender beispielsweise muss nicht nach jedem Reinigungsprozess eine neue schützende Schicht auftragen, was ein wirtschaftlicher Vorteil bedeutet.

Überraschenderweise weisen beschichtete Produkte mit einer Beschichtung enthaltend der erfindungsgemäßen härtbaren Kondensationsverbindungen Anti-Adhäsiv-Eigenschaften, Anti-Graffiti-Eigenschaften, Anti-Friction-Eigenschaften und/oder Antifouling Eigenschaften auf.

Die Verwendung der erfindungsgemäßen härtbaren Kondensationsverbindungen zur Herstellung von Beschichtungen mit Anti-Adhäsiv-Eigenschaften, Anti-Graffiti-Eigenschaften, Anti-Friction-Eigenschaften und/oder Antifouling Eigenschaften ist auch Gegenstand dieser Erfindung.

Auch sind Beschichtungen, Lacke, Farben, Tinten, Überzüge, Dichtungsmassen und Klebstoffe erhältlich durch Verwendung der erfindungsgemäßen härtbaren Kondensationsverbindungen ein weiterer Gegenstand der Erfindung.

Dem Fachmann ist bekannt, dass Beschichtungen auch Adhesionspromotoren wie beispielsweise Aminosilanen, UV-Stabilisatoren, Füllstoffe, Pigmente, Thixotropiermittel wie beispielsweise pyrogene Kieselsäure, Reaktivverdünner oder Vernetzer wie beispielsweise Silanen, Lösemittel wie beispielsweise Xylol, Verlaufsmittel, Entschäumer oder Beschleuniger enthalten können.

Nachstehend soll die Erfindung anhand von Ausführungsbeispielen näher erläutert werden.

### Methoden

### Kernspinresonanz (NMR)

Die NMR-Spektren werden gemessen mit Hilfe eines Avance III 400 Spektrometers der Fa. Bruker. ²⁹Si-NMR Spektren werden gemessen mit einem PA BBO 400Si BB-H-D-10 z Probenkopf der Fa. Bruker, bei einer Frequenz von 79,495 MHz. Die Messzeit betrug 2,569 Sekunde pro Scan, bei 512 Scans pro Spektrum.

### Gelpermeationchromatographie (GPC)

Molmassen und -verteilung werden nach DIN 55672-1 bestimmt. Bei dem beschriebenen Verfahren handelt es sich nicht um ein Absolutverfahren. Vielmehr ist eine Kalibrierung, die mit kommerziell verfügbaren, linear aufgebauten und nach unabhängigen Absolutverfahren charakterisierten Polystyrol-Standards durchgeführt wird, notwendig. Instrument: Agilent 1100 von Agilent Technologie, Säulenkombination: SDV 1000/10000Å, Länge 65,00 cm, Temperatur 30 °C, Tetrahydrofuran als Mobile Phase, Fließrate 1ml/min, Probenkonzentration 10 g/l. RI Detektor, Auswertung gegen einen Polystyrolstandard im Molmassenbereich von 162 - 2,520,000 g.mol⁻¹.

### Anti-Graffiti-Wirkung

a) Die Anti-Graffiti-Wirkung wird angelehnt an ASTM D7089-06 bestimmt. Die erfindungsgemäßen Kondensationsverbindungen wurden mit Hilfe eines 100 µm-Spiralrakels auf Aluminium Q-Panele aufgetragen. Die beschichteten Bleche wurden 24 Stunden lang getrocknet.

Dann wurden die Bleche zur Hälfte mit Hilfe einer Spraydose mit einem handelsüblichen, Blau pigmentierten Nitrocelluloselack (FLT Handel & Service GmbH) lackiert und 24h getrocknet. Anschließend wurden die beschichteten Bleche mit der blauen Lackfarbe mit Hilfe eines Wasserstrahls, der mit einem Druck von 5 bar einwirkt, beaufschlagt, bis sich der blaue Lack vollständig entfernen lässt. Üblicherweise beträgt die Dauer maximal 5 Minuten. Kleine Farbreste an den Rändern der Bleche werden hierbei vernachlässigt.

Es wird hier überprüft, ob die Beschichtung eine Anti-Graffiti-Wirkung aufzeigt oder nicht.

b) Die Bleche, die diesen ersten Zyklus überstanden haben, wurden erneut getrocknet und nochmals mit der Spraydose lackiert und getrocknet. Die Prüfung wurde entsprechend mit dem Wasserstrahl so oft wiederholt, bis die blaue Lackschicht sich nicht mehr entfernen lässt.

Die Anzahl der Zyklen zeigt an, wie oft eine Beschichtung das Reinigungsprozedere überstanden hat, bis sie keine Anti-Graffiti-Wirkung mehr aufweist.

Je mehr Reinigungszyklen eine Beschichtung aufweist, desto wirtschaftlicher ist sie.

### Gleitwiderstandswert G (cN)

Zur Messung der Gleitfähigkeit hat sich eine Prüfmethode bewährt, bei der die Reibungskraft gemessen wird. Die Methode wird mittels eines Bluehillgeräts der Firma Instron durchgeführt.

Hierbei wird ein 500 g-Gewichtsstein mit definierter Filzunterlage von einer Zugmaschine gleichmäßig über die Lackoberfläche gezogen. Die dazu benötigte Kraft wird mit einem elektronischen Kraftaufnehmer gemessen. Die Prüfung wird bei konstanter Geschwindigkeit von 12 mm/sec durchgeführt und erlaubt eine reproduzierbare Messung mit hoher Genauigkeit. Für die Prüfung wurde eine erfindungsgemäße Beschichtungszusammensetzung enthaltend erfindungsgemäße Kondensationsverbindungen mit Hilfe eines 100 µm Spiralrakels auf Aluminium Q-Panele aufgetragen und für 24h getrocknet.

Je kleiner der Gleitwiderstandswert G (cN) ist, desto höher ist die Gleitfähigkeit der Beschichtungsoberfläche.

### Kompatibilität des erfindungsgemäßen Katalysators

Erfindungsgemäß wird die Kompatibilität des Kondensationskatalysators an Hand des Auftretens bzw. Nichtauftretens von Trübungen nach Einbringen desselben bzw. nach dessen in-situ-Bildung in der Reaktionsmatrix festgemacht.

Wird ein zu diesem Zweck aus der Reaktionsmatrix entnommenes Aliquot in eine 10 mm dicke Glasküvette eingebracht und lässt sich dann ein unmittelbar dahinter liegender Text (Schriftart: Arial, Schriftschnitt: Standard, Schriftfarbe: schwarz auf weißem Papier) bei Tages- und/ oder Kunstlicht unverzerrt lesen, so gilt die Reaktionsmatrix als trübungsfrei und der Katalysator als erfindungsgemäß kompatibel.

### Weitere Bedingungen

Werden im Rahmen der vorliegenden Erfindung %-Angaben gemacht, so handelt es sich, wenn nicht anderes angegeben, um Angaben in Gewichts-%. Bei Zusammensetzungen beziehen sich die Prozentangaben, sofern nicht anders definiert, auf die Gesamtzusammensetzung. Werden in den nachfolgenden Beispielen Mittelwerte genannt, so handelt es sich, wenn Nichts anderes angegeben, um Zahlenmittel. Werden nachfolgend Messwerte angegeben, so sind diese, sofern nicht anders definiert, bei einem Druck von 101325 Pa, einer Temperatur von 23 °C und der umgebenden relativen Luftfeuchtigkeit von ca. 40 % ermittelt.

### Materialien und Geräte

- Decamethylcyclopentasiloxan, Fa. Dow
- Essigsäureanhydrid, Fa. Merck
- Essigsäure, 100%, Fa. J.T. Baker
- Trifluormethansulfonsäure, Fa. Alfa Aesar
- Kaliumacetat, Fa, Sigma-Aldrich
- Polydimethylsiloxandiol, Fa. Wacker
- Tetra-n-Butyltitanat, Fa. ABCR
- Tetraisopropyltitanat, Fa. ABCR
- Toluol, Fa. Reininghaus Chemie
- Silikophen AC1000 (Poly(methyltrimethoxysilan)), Fa. Evonik Industries
- V5000 (Poly(phenyltriethoxysilan)), Fa. Evonik Industries
- Dowsil 3074 Intermediate, (methoxyfunktionelles Phenyl(Methyl)-Silikonharz) Fa. Dow
- Dynasylan AMEO (3-Aminopropyltriethoxsilan), Fa. Evonik Industries
- Rotationsverdampfer Rotavapor R-300, Fa. Büchi
- Ölbad Rotavapor B-300 Base, Fa. Büchi
- Standard Glasstreifen, Fa. Gläserei Glänzer
- BK3 drying recorder, Fa. The Mickle Laboratory Engineering
- Q-Panels Aluminium, 6"x3", Fa. Q-Lab
- Buntsprühlack seidenmatt blau, FLT Handel & Service GmbH

### Beispiele

### 1. Herstellung der erfindungsgemäßen härtbaren Kondensationsverbindungen

### 1.1 Herstellung von endäquilibrierten Acetoxygruppentragenden Siloxanen

Zunächst werden endäquilibrierte α,ω-Diacetoxypolydimethylsiloxane, zur besseren Lesart im Weiteren α,ω-Diacetoxysiloxane, hergestellt. Diese werden hierbei durch die Umsetzung von Siloxancyclen (D₄ und/oder D₅) mit Acetanhydrid in Gegenwart von Trifluormethansulfonsäure und Essigsäure hergestellt, wie die Lehren der europäischen Anmeldungen mit den Aktenzeichen EP18172882.5 und EP18172876.7 offenbaren. Den Lehren dieser Schriften folgend, werden so drei α,ω-Diacetoxysiloxane A, B, und C mit mittleren Siloxankettenlängen von ca. 10, 15 und 35 Monomereinheiten hergestellt. Die in den α,ω-Diacetoxysiloxane enthaltenen Säuren werden anschließend mit Kaliumacetat neutralisiert und die ausgefällten Salze werden abfiltriert. Zur Entfernung von flüchtigen Bestandteilen wird das α,ω-Diacetoxysiloxan eine Stunde lang bei 130 °C und unter Anlegen eines Hilfsvakuums von 5 mbar destilliert.

**Tabelle 1:**

| **α,ω-Diacetoxypolydimethylsiloxane** | **Mittlere Siloxankettenlänge** |
|---|---|
| α,ω-Diacetoxysiloxan A | 10 |
| α,ω-Diacetoxysiloxan B | 15 |
| α,ω-Diacetoxysiloxan C | 35 |

### 1.2 Alkoxyfunktionelle Polysiloxane

Es werden die in Tabelle 2 aufgeführten Alkoxypolysiloxane eingesetzt.

**Tabelle 2:**

| **Alkoxypolysiloxan** | **Hersteller** |
|---|---|
| Silikophen AC1000 (Poly(methyltrimethoxysilan)) | Fa. Evonik Industries |
| V5000 (Poly(phenyltriethoxysilan)) | Fa. Evonik Industries |
| Dowsil 3074 Intermediate, (methoxyfunktionelles Phenyl(methyl)-Silikonharz) | Fa. Dow |

### Beispiel 1 (erfindungsgemäß):

An einem Rotationsverdampfer mit Heizbad (Rotavapor R-300) werden in einem 500 ml-Einhalsrundkolben 100,0 g Silikophen AC1000, 10,0 g α,ω-Diacetoxysiloxan B und 0,5 g Tetraisopropyltitanat gemeinsam vorgelegt und dann bei 130°C Heizbadtemperatur zunächst für eine Stunde bei 100 UpM und Umgebungsdruck vermischt. Für die Dauer von 2 Stunden wird zunächst ein Hilfsvakuum von 600 mbar und dann für die Dauer von 2 weiteren Stunden ein Hilfsvakuum von 100 mbar angelegt. Das bei der Reaktion entstehende Methylacetat wird in einem Auffangkolben gesammelt. Ein ²⁹Si-NMR-Spektrum des im Sumpfkolben verbleibenden Endproduktes belegt durch das Verschwinden des Signals bei -9 ppm, dass die endständigen Acetoxygruppen des α,ω-Diacetoxysiloxan B vollständig umgesetzt wurden. Ein GPC des farblos-klaren, Produktes zeigt ein zahlenmittleres Molekulargewicht Mₙ von 894 g/ mol und ein gewichtmittleres Molekulargewicht M_{w} von 4627 g/ mol und belegt somit einen deutlichen Molekulargewichtsaufbau gegenüber dem Ausgangsmaterial Silikophen AC1000 (Mₙ 586 und M_{w} 859 g/ mol).

### Beispiel 2 (erfindungsgemäß)

In Analogie zum Beispiel 1 werden in einem 2000 ml-Einhalsrundkolben 400,0 g Silikophen AC1000, 80,0 g α,ω-Diacetoxysiloxan B und 2,5 g Tetra-n-butyltitanat abgewogen und am Rotationsverdampfer zur Umsetzung gebracht. Ein ²⁹Si-NMR-Spektrum des Endproduktes zeigt durch das Verschwinden des Signals bei -9 ppm, dass die aus α,ω-Diacetoxysiloxan B stammenden, endständigen Acetoxygruppen vollständig umgesetzt wurden. Ein GPC weist ein zahlenmittleres Molekulargewicht Mₙ von 884 g/ mol und ein gewichtsmittleres Molekulargewicht M_{w} von 7767 g/mol aus und belegt somit einen deutlichen Molekulargewichtsaufbau gegenüber dem Ausgangsmaterial Silikophen AC1000 (Mₙ 586 und M_{w} 859 g/ mol).

### Beispiel 3 (erfindungsgemäß)

In einem 500 mL-Einhalsrundkolben werden 100,0 g Dowsil 3074 Intermediate, 7,5 g α,ω-Diacetoxysiloxan A und 0,4 g Tetraisopropyltitanat abgewogen. Die Umsetzung dieser Reaktionsmischung wird analog Beispiel 1 durchgeführt. Erhalten wird eine nahezu farblose, leicht trübe Flüssigkeit. Durch Überlagerung von Signalen im ²⁹Si-NMR-relevanten Verschiebungsbereich ist es nicht möglich, die Umsetzung der endständigen Acetoxygruppen des α,ω-Diacetoxysiloxan A mit Hilfe dieser Methode nachzuweisen. Ein angefertigtes GPC zeigt jedoch ein zahlenmittleres Molekulargewicht Mₙ von 1492 g/mol und ein gewichtsmittleres Molekulargewicht M_{w} von 2681 g/mol und belegt somit einen deutlichen Molekulargewichtsaufbau gegenüber dem Ausgangsmaterial Dowsil 3074 Intermediate (mit Mₙ = 899 g/mol und M_{w} = 1345 g/mol).

### Beispiel 4 (erfindungsgemäß)

In einem 500 ml-Einhalsrundkolben werden 100,0 g Dowsil 3074 Intermediate, 10,0 g α,ω-Diacetoxysiloxan B und 0,4 g Tetraisopropyltitanat abgewogen. Die Umsetzung dieser Reaktionsmischung wird analog Beispiel 1 durchgeführt. Isoliert wird eine nahezu farblose, leicht trübe Flüssigkeit. Durch Überlagerung von Signalen im ²⁹Si-NMR-relevanten Verschiebungsbereich ist es nicht möglich, die Umsetzung der endständigen Acetoxygruppen des α,ω-Diacetoxysiloxan B mit Hilfe dieser Methode nachzuweisen. Ein angefertigtes GPC zeigt aber ein zahlenmittleres Molekulargewicht Mₙ von 1449 g/ mol und ein gewichtsmittleres Molekulargewicht M_{w} von 2801 g/mol, und weist somit einen deutlichen Molekulargewichtsaufbau gegenüber dem Ausgangsmaterial Dowsil 3074 Intermediate (mit Mₙ = 899 g/mol und M_{w} = 1345 g/mol) nach.

### Beispiel 5 (erfindungsgemäß)

In einem einem 500 ml-Einhalsrundkolben werden 100,0 g V5000, 10,0 g α,ω-Diacetoxysiloxan B und 0,5 g Tetraisopropyltitanat abgewogen. Die Umsetzung dieser Reaktionsmischung wird analog Beispiel 1 durchgeführt. Isoliert wird eine leicht gelbliche, minimal trübe Flüssigkeit. Ein ²⁹Si-NMR-Spektrum des Endproduktes zeigt durch das Verschwinden des für endständige Acetoxygruppen charakteristischen Signals bei -9 ppm den vollständigen Umsatz von α,ω-Diacetoxysiloxan B. Ergänzend belegt ein GPC des Endproduktes ein zahlenmittleres Molekulargewicht Mₙ von 1070 g/mol und ein gewichtsmittleres Molekulargewicht M_{w} von 1457 g/mol und somit einen deutlichen Molekulargewichtsaufbau gegenüber dem eingesetzten Ausgangsmaterial V5000 (mit Mₙ = 806 g/ mol und M_{w} = 976 g/mol).

### 2. Herstellung einer erfindungsgemäßen Katalysatorlösung und deren Verwendung zur Herstellung der erfindungsgemäßen härtbaren Kondensationsverbindungen

### Beispiel 6 (erfindungsgemäß)

Es wurde eine Katalysatorlösung, bestehend aus 1,00 g Tetraisopropyltitanat, 0,37 g Essigsäureanhydrid und 2,00 g Toluol, hergestellt. Nach Abklingen der Exothermie ist die so gewonnene klare Katalysatorlösung direkt einsetzbar.

In Analogie zum Beispiel 1 werden in einem 500 ml-Einhalsrundkolben 100,0 g Silikophen AC1000, 10,0 g α,ω-Diacetoxysiloxan C und 1,0 g Katalysatorlösung abgewogen. Ein der homogenen Reaktionsmatrix entnommenes Aliquot wurde in eine 10 mm dicke Glasküvette eingebracht und ein unmittelbar dahinter liegender Text (Schriftart: Arial, Schriftschnitt: Standard, Schriftfarbe: schwarz auf weißem Papier) ließ sich bei Kunstlicht unverzerrt lesen, so dass die Reaktionsmatrix als trübungsfrei und der Katalysator als erfindungsgemäß kompatibel beurteilt wurden. Nach Wiedereinbringen des Probevolumens in den Reaktionsansatz wird dieser am Rotationsverdampfer auf 130 °C erhitzt und zur Umsetzung gebracht. Ein ²⁹Si-NMR-Spektrum des Endproduktes zeigt durch das Verschwinden des Signals bei -9 ppm, dass die aus α,ω-Diacetoxysiloxan C stammenden, endständigen Acetoxygruppen vollständig umgesetzt wurden. Ein GPC weist ein zahlenmittleres Molekulargewicht Mₙ von 831 g/ mol und ein gewichtsmittleres Molekulargewicht M_{w} von 2.893 g/mol aus, und belegt somit einen deutlichen Molekulargewichtsaufbau gegenüber dem Ausgangsmaterial Silikophen AC1000 (Mₙ 586 und M_{w} 859 g/ mol).

### Beispiel 7 (erfindungsgemäß)

In einem 250-ml-Mehrhalskolben wurden 6,0 g (0,0211 mol) Ti(IV)isopropanolat bei 23°C in 50 g Toluol unter Rühren vorgelegt und dann wurde eine Lösung bestehend aus 94,0 g α,ω-Diacetoxysiloxan B und 50 g Toluol mittels eines Tropftrichters innerhalb von 10 Minuten zudosiert. Der klare Reaktionsansatz wurde dann für eine Stunde auf 80°C erhitzt und anschließend bei 70°C und einem Hilfsvakuum < 5 mbar am Rotationsverdampfer von Flüchtigen befreit. Der flüssige Rückstand ist leicht gelblich und klar.

In einem 250-ml-Vierhalskolben wurden bei 23°C 50 g Silikophen AC1000 (Poly(methyltrimethoxysilan) unter Rühren vorgelegt und dann wurden 5g eines endäquilibrierten α,ω-Diacetoxysiloxan B (neutralisiert mit Kaliumacetat, filtriert, destilliert bei 130°C und einem angelegten Hilfsvakuum <5mbar, von Flüchtigen befreit , Kettenlänge zu N = 13,6, MG= 1112,9 g/mol nach ²⁹Si-NMR-Spektrum bestimmt) zugegeben. Unter Rühren wurden 4,6 g des hergestellten Titankatalysators hinzugefügt. Ein der homogenen Reaktionsmatrix entnommenes Aliquot wurde in eine 10 mm dicke Glasküvette eingebracht und ein unmittelbar dahinter liegender Text (Schriftart: Arial, Schriftschnitt: Standard, Schriftfarbe: schwarz auf weißem Papier) ließ sich bei Kunstlicht unverzerrt lesen, so dass die Reaktionsmatrix als trübungsfrei und der Katalysator als erfindungsgemäß kompatibel beurteilt wurden. Nach Wiedereinbringen des Probevolumens in den Reaktionsansatz wird dieser auf 130°C erhitzt. Nach 1 Stunde Reaktionszeit wurde für 4 weitere Stunden zur Entfernung flüchtiger Bestandteile ein Hilfsvakuum im Druckbereich zwischen 600 mbar und 100mbar angelegt.

Der nach Abkühlen isolierte Rückstand ist ein klares, leicht gelbliches Produkt, dessen zugehöriges ²⁹Si-NMR-Spektrum den vollständigen Umsatz des eingesetzten Acetoxysiloxans belegt.

### 2. Anwendungstechnische Prüfung

### 2.1 Anti-Graffiti-Wirkung

Die mit den erfindungsgemäßen härtbaren Kondensationsverbindungen (Beispiele 1 bis 6) beschichteten und ausgehärteten Bleche wurden zur Bestimmung der Anti-Graffiti-Eigenschaft herangezogen. Beispiele 1, 2 und 6 härteten ohne den Zusatz von Härtungskatalysatoren. Bei den Beispielen 3, 4 und 5 wurde 5,0 Gew.-% Dynasylan AMEO bezogen auf die gesamte Masse des Harzes als Härtungskatalysator zugesetzt, siehe Tabelle 3.

Als Vergleichsbeispiel VG1 wurde Silikophen AC1000 auf die Bleche appliziert und mit 1,5 Gew.-% Tetra-n-Butyltitanat (TnBT) bezogen auf die gesamte Menge des Harzes ausgehärtet. Als Vergleichsbeispiel VG2 wurde Dowsil 3074 Intermediate auf die Bleche appliziert und mit 5,0 Gew.-% Dynasylan AMEO bezogen auf die gesamte Menge des Harzes ausgehärtet.

Die Ergebnisse sind in Tabelle 3 aufgeführt. Es zeigt sich, dass die Vergleichsbeispiele VG1 und VG2 keine Anti-Graffiti-Wirkung aufwiesen, da die aufgesprühte Lackschicht sich nicht entfernen ließ. Die erfindungsgemäßen Beschichtungen mit den härtbaren Kondensationsverbindungen 1 - 6 wiesen eine Anti-Graffiti-Wirkung auf. Einige erfindungsgemäße Beschichtungen überstanden sogar bis zu fünf Reinigungszyklen.

**Tabelle 3: Anti-Graffiti-Wirkung**

| **Beispiel** | **Katalysator** | **Gew.-%** | **Anti-Graffiti-Wirkung** | **Zyklen** |
|---|---|---|---|---|
| 1 | | | ja | 2 |
| 2 | | | ja | 2 |
| 3 | AMEO | 5,0 | ja | 5 |
| 4 | AMEO | 5,0 | ja | 3 |
| 5 | AMEO | 5,0 | ja | 1 |
| 6 | | - | ja | 2 |
| VG1 | TnBT | 1,5 | nein | 0 |
| VG2 | AMEO | 5,0 | nein | 0 |

### 2.3 Gleitfähigkeit

Als Vergleichsbeispiel VG3 wurde Silikophen AC1000 auf das Blech appliziert und mit Hilfe von 1,5 Gew.-% Tetra(n-Butyl)titanat bezogen auf die gesamte Menge des Harzes ausgehärtet. Die Ergebnisse sind in der Tabelle 4 zusammengefasst. Es zeigt sich, dass die erfindungsgemäßen Beschichtungen Beispiel 1 und 6 verglichen mit dem Vergleichsbeispiel (VG3) einen erheblich reduzierten Gleitwert haben. Die Gleitfähigkeit der erfindungsgemäßen Beschichtungen sind daher besser als die des Vergleichsbeispiels.

**Tabelle 4: Gleitwerte**

| **Beispiel** | **Gleitwert / cN** |
|---|---|
| 1 | 129 |
| 6 | 66 |
| VG3 | 229 |

## Patentansprüche

1. Härtbare Kondensationsverbindungen erhältlich durch die Umsetzung von
- endäquilibrierten Acetoxygruppentragenden Siloxanen gemäß Formel (I) und/oder Formel (II): 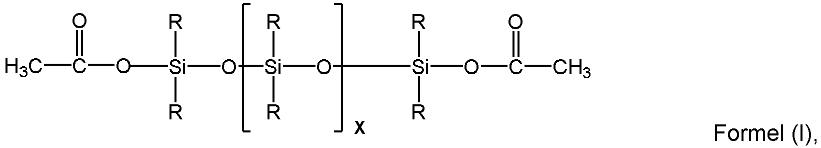 wobei R = ein Alkylrest mit 1 bis 4 Kohlenstoffatomen und/oder Phenylrest, bevorzugt R = Methylrest und 1 ≤ x ≤ 500, bevorzugt 3 ≤ x ≤ 100, besonders bevorzugt 5 ≤ x ≤ 40 ist,
oder 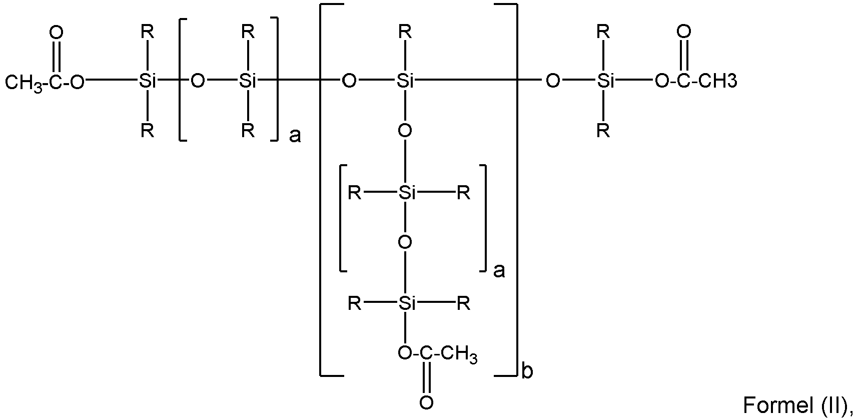 wobei 0 ≤ a ≤ 100 und 1 ≤ b ≤ 10, bevorzugt mit 2 ≤ a ≤ 30 und 1 ≤ b ≤ 6, besonders bevorzugt mit 3 ≤ a ≤ 10 und 2 ≤ b ≤ 5 sind,
- mit mindestens einem alkoxyfunktionellen Polysiloxan gemäß der Formel (III)
R¹_{c}Si(OR²)_{d}O_{(4-c-d)/2} Formel (III)
worin c größer gleich 0 bis kleiner gleich 2 und d größer gleich 0 bis kleiner gleich 4 sind und die Summe von c + d kleiner 4 ist,
R¹ unabhängig voneinander, gleich oder verschieden lineare oder verzweigte, gesättigte wie auch ein oder mehrfach ungesättigte oder aromatische Kohlenwasserstoffreste, und
R² eine Alkylgruppe bestehend aus 1 bis 8 Kohlenstoffatomen, bevorzugt eine Methyl- oder Ethylgruppe, ist
- in Gegenwart eines Katalysators.

2. Kondensationsverbindungen nach Anspruch 1, **dadurch gekennzeichnet, dass** bei der Umsetzung mindestens ein Vernetzer gemäß Formel (IV)
R³ₑSi(OR⁴)_{f} Formel (IV)
worin e größer gleich 0 bis kleiner gleich 2 ist, f größer gleich 2 bis kleiner gleich 4 und die Summe von e + f gleich 4 ist,
R³ = eine gesättigte oder ungesättigte Alkylgruppe bestehend aus 1 bis 8 Kohlenstoffatomen oder eine aromatische Gruppierung mit 6 bis 20 Kohlenstoffatomen und
R⁴ = eine Alkyl- oder Acylgruppe bestehend aus 1 bis 8 Kohlenstoffatomen ist,
zugegen ist.

3. Kondensationsverbindungen nach einem der vorgenannten Ansprüche, **dadurch gekennzeichnet, dass** endäquilibrierte acetoxygruppentragende Siloxane gemäß Formel (I) oder Formel (II) neutralisiert sind.

4. Kondensationsverbindungen nach einem der vorgenannten Ansprüche, **dadurch gekennzeichnet, dass** α,ω-Acetoxygruppen tragende, lineare Polydimethylsiloxane für die Umsetzung eingesetzt werden.

5. Kondensationsverbindungen nach einem der vorgenannten Ansprüche, **dadurch gekennzeichnet, dass** das alkoxyfunktionelle Polysiloxan Reste R¹ = Methyl- und/oder Phenylreste aufweist.

6. Kondensationsverbindungen nach einem der vorgenannten Ansprüche, **dadurch gekennzeichnet, dass** das gewichtsmittlere Molekulargewicht der alkoxyfunktionellen Polysiloxane 200 bis 20.000 g/mol, bevorzugt 200 bis 10.000 g/mol, besonders bevorzugt 300 bis 3.000 g/mol und weiter besonders bevorzugt 400 bis 2.000 g/mol, bestimmt nach DIN 55672-1, ist.

7. Kondensationsverbindungen nach einem der vorgenannten Ansprüche, **dadurch gekennzeichnet, dass** die Alkoxyfunktionalität der alkoxyfunktionellen Polysiloxane von 50 bis 3 Gew.-%, bevorzugt 40 bis 5 Gew.-%, und besonders bevorzugt 30 bis 7 Gew.-%, bezogen auf die Gesamtmasse der Verbindung.

8. Kondensationsverbindungen nach einem der vorgenannten Ansprüche, **dadurch gekennzeichnet, dass** der Katalysator ausgewählt ist aus Zinndiacetat, Zinndioctoat, Dibutylzinndiacetylacetonat, Dibutylzinndilaurat, Zinntetraacetat, Dibutylzinndiacetat, Dibutylzinndioctoat, Dibutylzinndioleat, Dimethoxydibutylzinn, Dimethylzinn, Dibutylzinnbenzylmaleat, Bis-(triethoxysiloxy)dibutylzinn, Diphenylzinndiacetat, Dioctylzinndilaurat, Dioctylzinndineodecanoat, Tetraethoxy-titan, Tetra-n-propoxy-titan, Tetra-i-propoxy-titan, Tetra-n-butoxytitan, Tetra-i-butoxytitan, Tetrakis-(2-ethylhexoxy)titan, Di-i-propoxy-bis(ethylacetoacetat)titan, Dipropoxy-bis-(acetylacetonat)-titan, Di-i-propoxy-bis-(acetylacetonat)-titan, Dibutoxy-bis-(acetylacetonat)-titan, Tri-i-acetat-propoxyallyltitan, Isopropoxyoctylenglycol- oder Bis(acetylacetonat)-titanoxid, Bleidiacetat, Blei-di-2-ethylhexanoat, Blei-dineodecanoat, Bleitetraacetat, Bleitetrapropionat, Zinkacetylacetonat, Zink-2-ethylcaproat, Zinkdiacetat, Bis-(2-Ethylhexansäure)-Zink, Zinkdineodecanoat, Zinkdiundecenoat, Zinkdimethacrylat, Tetrakis-(2-Ethylhexansäure)-zirkoniumdichlorid, Tetrakis-(Methacrylsäure)-zirkoniumdichlorid, Kobaltdiacetat, Bismutcarboxylate, Bismuttriflat.

9. Kondensationsverbindungen nach einem der vorgenannten Ansprüche, **dadurch gekennzeichnet, dass** der Vernetzer ausgewählt ist aus Methyltriacetoxysilan, Ethyltriacetoxysilan, Dimethyldiacetoxysilan, Methyltrimethoxysilan, Methyltriethoxysilan, Vinyltrimethoxysilan, Vinyltriethoxysilan, Tetramethoxysilan, Tetraethoxysilan, Phenyltriethoxysilan, Phenyltrimethoxysilan, Propyltrimethoxysilan, Propyltriethoxysilan, Dimethyldimethoxysilan, Dimethyldiethoxysilan, Dimethoxyphenylmethylsilan und Diethoxyphenylmethylsilan.

10. Verfahren zur Herstellung der Kondensationsverbindungen nach einem der Ansprüche 1 - 9, **dadurch gekennzeichnet, dass** man endäquilibrierte acetoxygruppentragenden Siloxane gemäß Formel (I) und/oder Formel (II) mit mindestens einem alkoxyfunktionellen Polysiloxan gemäß der Formel (III) in Gegenwart eines Katalysators zur Reaktion bringt.

11. Verfahren nach Anspruch 10, **dadurch gekennzeichnet, dass** das Verhältnis von acetoxygruppentragenden Siloxanen gemäß Formel (I) und/oder Formel (II) zu alkoxyfunktionellen Polysiloxanen gemäß Formel (III) 1 zu 99 bis 99 zu 1 Gew.-%, bevorzugt 3 zu 97 bis 50 zu 50 Gew.-%, und besonderes bevorzugt 5 zu 95 bis 30 zu 70 Gew.-%, bezogen auf die Silikonmatrix, beträgt.

12. Verfahren nach einem der Ansprüche 9 - 11, **dadurch gekennzeichnet, dass** der Katalysator in situ oder vor der Umsetzung, bevorzugt aus einer Lewissäure wie einem Titanalkoholat und einem Anhydrid wie Essigsäureanhydrid, gebildet wird.

13. Verfahren nach einem der Ansprüche 9 - 12, **dadurch gekennzeichnet, dass** die endäquilibrierte acetoxygruppentragende Siloxane gemäß Formel (I) oder Formel (II) neutralisiert und gegebenenfalls destilliert wurden.

14. Verfahren nach einem der Ansprüche 9 - 13, **dadurch gekennzeichnet, dass** die acetoxygruppentragende Siloxane D-Einheiten aufweisen.

15. Verfahren nach einem der Ansprüche 9 - 14, **dadurch gekennzeichnet, dass** α,ω-Acetoxygruppen tragende lineare Polydimethylsiloxane eingesetzt werden.

16. Verfahren nach einem der Ansprüche 9 - 15, **dadurch gekennzeichnet, dass** alkoxyfunktionelle Polysiloxane mit Reste R¹ = Methyl- und/oder Phenylreste eingesetzt werden.

17. Verfahren nach einem der Ansprüche 9 - 16, **dadurch gekennzeichnet, dass** die Alkoxyfunktionalität der alkoxyfunktionellen Polysiloxane von 50 bis 3 Gew.-%, bevorzugt 40 bis 5 Gew.-%, und besonders bevorzugt 30 bis 7 Gew.-%, bezogen auf die Gesamtmasse der Verbindung beträgt.

18. Verfahren nach einem der Ansprüche 9 - 17, **dadurch gekennzeichnet, dass** der Katalysator ausgewählt ist aus Zinndiacetat, Zinndioctoat, Dibutylzinndiacetylacetonat, Dibutylzinndilaurat, Zinntetraacetat, Dibutylzinndiacetat, Dibutylzinndioctoat, Dibutylzinndioleat, Dimethoxydibutylzinn, Dimethylzinn, Dibutylzinnbenzylmaleat, Bis(triethoxysiloxy)dibutylzinn, Diphenylzinndiacetat, Dioctylzinndilaurat, Dioctylzinndineodecanoat, Tetraethoxy-titan, Tetra-n-propoxy-titan, Tetra-i-propoxy-titan, Tetra-n-butoxytitan, Tetra-i-butoxytitan, Tetrakis-(2-ethylhexoxy)titan, Di-i-propoxy-bis(ethylacetoacetat)titan, Dipropoxy-bis-(acetylacetonat)-titan, Di-i-propoxy-bis-(acetylacetonat)-titan, Dibutoxy-bis-(acetylacetonat)-titan, Tri-i-acetatpropoxyallyltitan, Isopropoxyoctylenglycol- oder Bis(acetylacetonat)-titanoxid, Bleidiacetat, Blei-di-2-ethylhexanoat, Blei-dineodecanoat, Bleitetraacetat, Bleitetrapropionat, Zinkacetylacetonat, Zink-2-ethylcaproat, Zinkdiacetat, Bis-(2-Ethylhexansäure)-Zink, Zinkdineodecanoat, Zinkdiundecenoat, Zinkdimethacrylat, Tetrakis-(2-Ethylhexansäure)-zirkoniumdichlorid, Tetrakis-(Methacrylsäure)-zirkoniumdichlorid, Kobaltdiacetat, Bismutcarboxylate, Bismuttriflat

19. Verfahren nach einem der Ansprüche 9 -18, **dadurch gekennzeichnet, dass** mindestens ein Vernetzer gemäß Formel (IV) eingesetzt wird.

20. Verfahren nach einem der Ansprüche 9 - 19, **dadurch gekennzeichnet, dass** der Vernetzer ausgewählt ist aus Methyltriacetoxysilan, Ethyltriacetoxysilan, Dimethyldiacetoxysilan, Methyltrimethoxysilan, Methyltriethoxysilan, Vinyltrimethoxysilan, Vinyltriethoxysilan, Tetramethoxysilan, Tetraethoxysilan, Phenyltriethoxysilan, Phenyltrimethoxysilan, Propyltrimethoxysilan, Propyltriethoxysilan, Dimethyldimethoxysilan, Dimethyldiethoxysilan und Dimethoxyphenylmethylsilan.

21. Verfahren nach einem der Ansprüche 9 - 20, **dadurch gekennzeichnet, dass** man während der Umsetzung den aus dem Rest R² und der Acetoxygruppe gebildeten Essigsäureester entfernt.

22. Verfahren nach Anspruch 21, **dadurch gekennzeichnet, dass** man der Reaktion den gebildeten Essigsäureester durch Destillation und/oder gegebenenfalls unter Anlegen eines Hilfsvakuums entfernt.

23. Verfahren nach einem der Ansprüche 9 - 22, **dadurch gekennzeichnet, dass** es sich hierbei um eine vollständige Kondensationsreaktion im Hinblick auf eingesetztes Acetoxysiloxan/silan handelt.

24. Verwendung der härtbaren Kondensationsverbindungen nach einem der Ansprüche 1 - 9 zur Herstellung von Beschichtungen mit anti-adhäsiv-Eigenschaften, anti-graffiti-Eigenschaften und/oder Antifouling Eigenschaften.

25. Beschichtetes Produkt mit einer Beschichtung enthaltend eine Kondensationsverbindung nach einem der Ansprüche 1 - 9.

## Claims

1. Curable condensation compounds obtainable by the reaction of
- end-equilibrated acetoxy group-bearing siloxanes of formula (I) and/or formula (II): 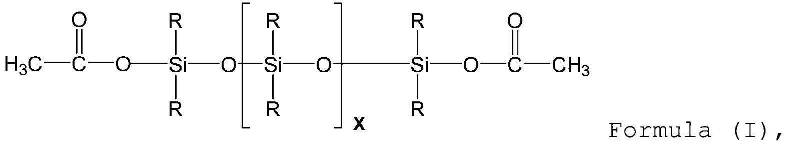 where R = an alkyl radical having 1 to 4 carbon atoms and/or phenyl radical, preferably R = methyl radical, and 1 ≤ x ≤ 500, preferably 3 ≤ x ≤ 100, more preferably 5 ≤ x ≤ 40,
or 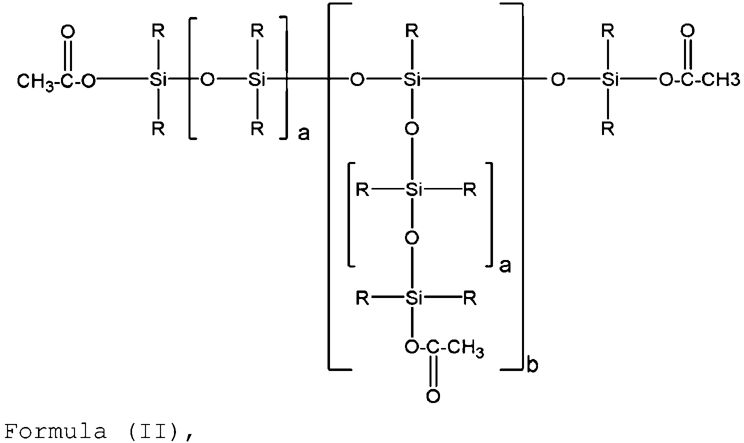 where 0 ≤ a ≤ 100 and 1 ≤ b ≤ 10, preferably with 2 ≤ a ≤ 30 and 1 ≤ b ≤ 6, more preferably with 3 ≤ a ≤ 10 and 2 ≤ b ≤ 5,
- with at least one alkoxy-functional polysiloxane of the formula (III)
R¹_{c}Si(OR²)_{d}O_{(4-c-d)/2} Formula (III)
in which c is not less than 0 to not more than 2 and d is not less than 0 to not more than 4, and the sum total of c + d is less than 4,
R¹ is the same or different and is independently linear or branched, saturated or else mono- or polyunsaturated or aromatic hydrocarbon radicals, and
R² is an alkyl group consisting of 1 to 8 carbon atoms, preferably a methyl or ethyl group,
- in the presence of a catalyst.

2. Condensation compounds according to Claim 1, **characterized in that** the reaction includes at least one crosslinker of formula (IV)
R³ₑSi(OR⁴)_{f} Formula (IV)
in which e is not less than 0 to not more than 2, f is not less than 2 to not more than 4, and the sum total of e + f is 4,
R³ = a saturated or unsaturated alkyl group consisting of 1 to 8 carbon atoms or an aromatic moiety having 6 to 20 carbon atoms and
R⁴ = an alkyl or acyl group consisting of 1 to 8 carbon atoms.

3. Condensation compounds according to either of the preceding claims, **characterized in that** end-equilibrated acetoxy group-bearing siloxanes of formula (I) or formula (II) have been neutralized.

4. Condensation compounds according to any of the preceding claims, **characterized in that** α,ω-acetoxy group-bearing linear polydimethylsiloxanes are used for the reaction.

5. Condensation compounds according to any of the preceding claims, **characterized in that** the alkoxy-functional polysiloxane has R¹ radicals = methyl and phenyl radicals.

6. Condensation compounds according to any of the preceding claims, **characterized in that** the weight-average molecular weight of the alkoxy-functional polysiloxanes is 200 to 20 000 g/mol, preferably 200 to 10 000 g/mol, more preferably 300 to 3000 g/mol and even further preferably 400 to 2000 g/mol, determined to DIN 55672-1.

7. Condensation compounds according to any of the preceding claims, **characterized in that** the alkoxy functionality of the alkoxy-functional polysiloxanes is from 50% to 3% by weight, preferably 40% to 5% by weight and more preferably 30% to 7% by weight, based on the total mass of the compound.

8. Condensation compounds according to any of the preceding claims, **characterized in that** the catalyst is selected from tin diacetate, tin dioctoate, dibutyltin diacetylacetonate, dibutyltin dilaurate, tin tetraacetate, dibutyltin diacetate, dibutyltin dioctoate, dibutyltin dioleate, dimethoxydibutyltin, dimethyltin, dibutyltinbenzyl maleate, bis(triethoxysiloxy)dibutyltin, diphenyltin diacetate, dioctyltin dilaurate, dioctyltin dineodecanoate, tetraethoxytitanium, tetra-n-propoxytitanium, tetraisopropoxytitanium, tetra-n-butoxytitanium, tetraisobutoxytitanium, tetrakis(2-ethylhexoxy) titanium, diisopropoxybis(ethylacetoacetato)titanium, dipropoxybis(acetylacetonato)titanium, diisopropoxybis(acetylacetonato)titanium, dibutoxybis(acetylacetonato)titanium, triisopropoxyallyltitanium acetate, isopropoxyoctylene glycol-titanium oxide or bis(acetylacetonato)titanium oxide, lead diacetate, lead di-2-ethylhexanoate, lead dineodecanoate, lead tetraacetate, lead tetrapropionate, zinc acetylacetonate, zinc 2-ethylcaproate, zinc diacetate, bis(2-ethylhexanoyl) zinc, zinc dineodecanoate, zinc diundecenoate, zinc dimethacrylate, tetrakis(2-ethylhexanoyl) zirconium dichloride, tetrakis(methacryloyl) zirconium dichloride, cobalt diacetate, bismuth carboxylates, bismuth triflate.

9. Condensation compounds according to any of the preceding claims, **characterized in that** the crosslinker is selected from methyltriacetoxysilane, ethyltriacetoxysilane, dimethyldiacetoxysilane, methyltrimethoxysilane, methyltriethoxysilane, vinyltrimethoxysilane, vinyltriethoxysilane, tetramethoxysilane, tetraethoxysilane, phenyltriethoxysilane, phenyltrimethoxysilane, propyltrimethoxysilane, propyltriethoxysilane, dimethyldimethoxysilane, dimethyldiethoxysilane, dimethoxyphenylmethylsilane and diethoxyphenylmethylsilane.

10. Process for preparing the condensation compounds according to any of Claims 1-9, **characterized in that** end-equilibrated acetoxy group-bearing siloxanes of formula (I) and/or formula (II) are reacted with at least one alkoxy-functional polysiloxane of the formula (III) in the presence of a catalyst.

11. Process according to Claim 10, **characterized in that** the weight ratio of acetoxy group-bearing siloxanes of formula (I) and/or formula (II) to alkoxy-functional polysiloxanes of formula (III) is 1:99 to 99:1, preferably 3:97 to 50:50 and more preferably 5:95 to 30:70, based on the silicone matrix.

12. Process according to any of Claims 9-11, **characterized in that** the catalyst is formed in situ or prior to the reaction, preferably from a Lewis acid such as a titanium alkoxide and an anhydride such as acetic anhydride.

13. Process according to any of Claims 9-12, **characterized in that** the end-equilibrated acetoxy group-bearing siloxanes of formula (I) or formula (II) have been neutralized and optionally distilled.

14. Process according to any of Claims 9-13, **characterized in that** the acetoxy group-bearing siloxanes have D units.

15. Process according to any of Claims 9-14, **characterized in that** α,ω-acetoxy group-bearing linear polydimethylsiloxanes are used.

16. Process according to any of Claims 9-15, **characterized in that** alkoxy-functional polysiloxanes having R¹ radicals = methyl and phenyl radicals are used.

17. Process according to any of Claims 9-16, **characterized in that** the alkoxy functionality of the alkoxy-functional polysiloxanes is from 50% to 3% by weight, preferably 40% to 5% by weight and more preferably 30% to 7% by weight, based on the total mass of the compound.

18. Process according to any of Claims 9-17, **characterized in that** the catalyst is selected from tin diacetate, tin dioctoate, dibutyltin diacetylacetonate, dibutyltin dilaurate, tin tetraacetate, dibutyltin diacetate, dibutyltin dioctoate, dibutyltin dioleate, dimethoxydibutyltin, dimethyltin, dibutyltinbenzyl maleate, bis(triethoxysiloxy)dibutyltin, diphenyltin diacetate, dioctyltin dilaurate, dioctyltin dineodecanoate, tetraethoxytitanium, tetra-n-propoxytitanium, tetraisopropoxytitanium, tetra-n-butoxytitanium, tetraisobutoxytitanium, tetrakis(2-ethylhexoxy) titanium, diisopropoxybis(ethylacetoacetato)titanium, dipropoxybis(acetylacetonato)titanium, diisopropoxybis(acetylacetonato)titanium, dibutoxybis(acetylacetonato)titanium, triisopropoxyallyltitanium acetate, isopropoxyoctylene glycol-titanium oxide or bis(acetylacetonato)titanium oxide, lead diacetate, lead di-2-ethylhexanoate, lead dineodecanoate, lead tetraacetate, lead tetrapropionate, zinc acetylacetonate, zinc 2-ethylcaproate, zinc diacetate, bis(2-ethylhexanoyl) zinc, zinc dineodecanoate, zinc diundecenoate, zinc dimethacrylate, tetrakis(2-ethylhexanoyl)zirconium dichloride, tetrakis(methacryloyl) zirconium dichloride, cobalt diacetate, bismuth carboxylates, bismuth triflate.

19. Process according to any of Claims 9-18, **characterized in that** at least one crosslinker of formula (IV) is used.

20. Process according to any of Claims 9-19, **characterized in that** the crosslinker is selected from methyltriacetoxysilane, ethyltriacetoxysilane, dimethyldiacetoxysilane, methyltrimethoxysilane, methyltriethoxysilane, vinyltrimethoxysilane, vinyltriethoxysilane, tetramethoxysilane, tetraethoxysilane, phenyltriethoxysilane, phenyltrimethoxysilane, propyltrimethoxysilane, propyltriethoxysilane, dimethyldimethoxysilane, dimethyldiethoxysilane and dimethoxyphenylmethylsilane.

21. Process according to any of Claims 9-20, **characterized in that** the acetic ester formed from the R² radical and the acetoxy group is removed during the reaction.

22. Process according to Claim 21, **characterized in that** the acetic ester formed is removed from the reaction by distillation and/or optionally with application of an auxiliary vacuum.

23. Process according to any of Claims 9-22, **characterized in that** the condensation reaction is complete with respect to acetoxysiloxane/silane used.

24. Use of the curable condensation compounds according to any of Claims 1-9 for production of coatings having anti-adhesive properties, anti-graffiti properties and/or anti-fouling properties.

25. Coated product having a coating comprising a condensation compound according to any of Claims 1-9.

## Revendications

1. Composés de condensation durcissables pouvant être obtenus par la transformation de
- siloxanes selon la formule (I) et/ou la formule (II) portant des groupes acétoxy complètement équilibrés : 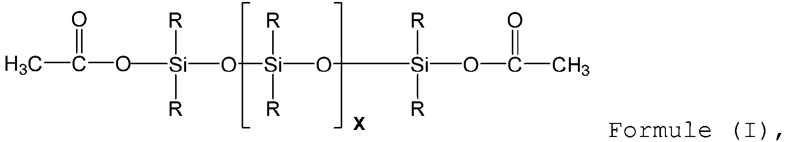 dans laquelle R = un radical alkyle comprenant 1 à 4 atomes de carbone et/ou un radical phényle, de préférence R = radical méthyle, et 1 ≤ x ≤ 500, de préférence 3 ≤ x ≤ 100, de manière particulièrement préférée 5 ≤ x ≤ 40,
ou 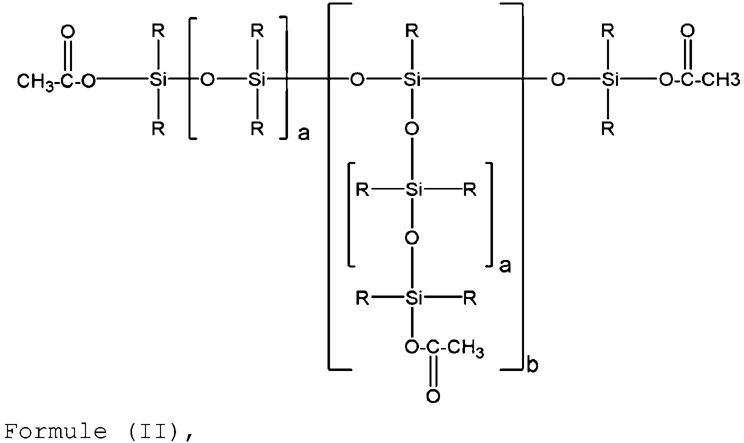 dans laquelle 0 ≤ a ≤ 100 et 1 ≤ b ≤ 10, de préférence 2 ≤ a ≤ 30 et 1 ≤ b ≤ 6, de manière particulièrement préférée 3 ≤ a ≤ 10 et 2 ≤ b ≤ 5,
- avec au moins un polysiloxane à fonctionnalité alcoxy selon la formule (III)
R¹_{c}Si(OR²)_{d}O_{(4-c-d)/2} Formule (III)
dans laquelle c vaut 0 ou plus à 2 ou moins et d vaut 0 ou plus à 4 ou moins et la somme de c + d est inférieure à 4,
R¹ représente, indépendamment, des radicaux hydrocarbonés identiques ou différents, linéaires ou ramifiés, saturés ainsi que monoinsaturés ou polyinsaturés ou aromatiques et
R² représente un groupe alkyle constitué par 1 à 8 atomes de carbone, de préférence un groupe méthyle ou éthyle,
- en présence d'un catalyseur.

2. Composés de condensation selon la revendication 1, **caractérisés en ce que**, lors de la transformation, au moins un réticulant selon la formule (IV)
R³ₑSi(OR⁴)_{f} Formule (IV)
dans laquelle e vaut 0 ou plus à 2 ou moins, f vaut 2 ou plus à 4 ou moins et la somme de e + f est égale à 4,
R³ = un groupe alkyle saturé ou insaturé constitué par 1 à 8 atomes de carbone ou un groupe aromatique comprenant 6 à 20 atomes de carbone et
R⁴ = un groupe alkyle ou acyle constitué par 1 à 8 atomes de carbone,
est présent.

3. Composés de condensation selon l'une des revendications précédentes, **caractérisés en ce que** les siloxanes portant des groupes acétoxy complètement équilibrés selon la formule (I) ou la formule (II) sont neutralisés.

4. Composés de condensation selon l'une des revendications précédentes, **caractérisés en ce que** des polydiméthylsiloxanes linéaires portant des groupes acétoxy en position α,ω sont utilisés pour la transformation.

5. Composés de condensation selon l'une des revendications précédentes, **caractérisés en ce que** le polysiloxane à fonctionnalité alcoxy présente des radicaux R¹ = méthyle et/ou phényle.

6. Composés de condensation selon l'une des revendications précédentes, **caractérisés en ce que** le poids moléculaire moyen en poids des polysiloxanes à fonctionnalité alcoxy est de 200 à 20.000 g/mole, de préférence de 200 à 10.000 g/mole, de manière particulièrement préférée de 300 à 3000 g/mole et de manière encore plus particulièrement préférée de 400 à 2000 g/mole, déterminé selon la norme DIN 55672-1.

7. Composés de condensation selon l'une des revendications précédentes, **caractérisés en ce que** la fonctionnalité alcoxy des polysiloxanes à fonctionnalité alcoxy est de 50 à 3% en poids, de préférence de 40 à 5% en poids et de manière particulièrement préférée de 30 à 7% en poids, par rapport à la masse totale du composé.

8. Composés de condensation selon l'une des revendications précédentes, **caractérisés en ce que** le catalyseur est choisi parmi le diacétate d'étain, le dioctoate d'étain, le diacétylacétonate de dibutylétain, le dilaurate de dibutylétain, le tétraacétate d'étain, le diacétate de dibutylétain, le dioctoate de dibutylétain, le dioléate de dibutylétain, le diméthoxydibutylétain, le diméthylétain, le benzylmaléate de dibutylétain, le bis-(triéthoxysiloxy)dibutylétain, le diacétate de diphénylétain, le dilaurate de dioctylétain, le dinéodécanoate de dioctylétain, le tétraéthoxytitane, le tétra-n-propoxytitane, le tétra-i-propoxytitane, le tétra-n-butoxytitane, le tétra-i-butoxytitane, le tétrakis-(2-éthylhexoxy)titane, le di-i-propoxy-bis(éthylacétoacétate)titane, le dipropoxy-bis-(acétylacétonate)-titane, le di-i-propoxy-bis-(acétylacétonate)-titane, le dibutoxy-bis-(acétylacétonate)-titane, le tri-i-acétate-propoxyallyltitane, l'isopropoxyoctylèneglycol-oxyde de titane ou le bis(acétylacétonate)-oxyde de titane, le diacétate de plomb, le di-2-éthylhexanoate de plomb, le dinéodécanoate de plomb, le tétraacétate de plomb, le tétrapropionate de plomb, l'acétylacétonate de zinc, le 2-éthylcaproate de zinc, le diacétate de zinc, le bis-(acide 2-éthylhexanoïque)-zinc, le dinéodécanoate de zinc, le di-undécénoate de zinc, le diméthacrylate de zinc, le dichlorure de tétrakis-(acide 2-éthylhexanoïque)-zirconium, le dichlorure de tétrakis-(acide méthacrylique)-zirconium, le diacétate de cobalt, le carboxylate de bismuth, le triflate de bismuth.

9. Composés de condensation selon l'une des revendications précédentes, **caractérisés en ce que** le réticulant est choisi parmi le méthyltriacétoxysilane, l'éthyltriacétoxysilane, le diméthyldiacétoxysilane, le méthyltriméthoxysilane, le méthyltriéthoxysilane, le vinyltriméthoxysilane, le vinyltriéthoxysilane, le tétraméthoxysilane, le tétraéthoxysilane, le phényltriéthoxysilane, le phényltriméthoxysilane, le propyltriméthoxysilane, le propyltriéthoxysilane, le diméthyldiméthoxysilane, le diméthyldiéthoxysilane, le diméthoxyphénylméthylsilane et le diéthoxyphénylméthylsilane.

10. Procédé de préparation des composés de condensation selon l'une des revendications 1 - 9, **caractérisé en ce qu'**on fait réagir des siloxanes portant des groupes acétoxy complètement équilibrés selon la formule (I) et/ou la formule (II) avec au moins un polysiloxane à fonctionnalité alcoxy selon la formule (III) en présence d'un catalyseur.

11. Procédé selon la revendication 10, **caractérisé en ce que** le rapport des siloxanes portant des groupes acétoxy selon la formule (I) et/ou la formule (II) aux polysiloxanes à fonctionnalité alcoxy selon la formule (III) vaut 1:99 à 99:1% en poids, de préférence 3:97 à 50:50% en poids et de manière particulièrement préférée 5:95 à 30:70% en poids, par rapport à la matrice de silicone.

12. Procédé selon l'une des revendications 9 - 11, **caractérisé en ce que** le catalyseur est formé in situ ou avant la transformation, de préférence à partir d'un acide de Lewis, tel qu'un alcoolate de titane, et d'un anhydride, tel que l'anhydride d'acide citrique.

13. Procédé selon l'une des revendications 9 - 12, **caractérisé en ce que** les siloxanes portant des groupes acétoxy complètement équilibrés selon la formule (I) ou la formule (II) ont été neutralisés et le cas échéant distillés.

14. Procédé selon l'une des revendications 9 - 13, **caractérisé en ce que** les siloxanes portant des groupes acétoxy présentent des motifs D.

15. Procédé selon l'une des revendications 9 - 14, **caractérisé en ce que** des polydiméthylsiloxanes linéaires portant des groupes acétoxy en position α,ω sont utilisés.

16. Procédé selon l'une des revendications 9 - 15, **caractérisé en ce que** des polysiloxanes à fonctionnalité alcoxy présentant des radicaux R¹ = méthyle et/ou phényle sont utilisés.

17. Procédé selon l'une des revendications 9 - 16, **caractérisé en ce que** la fonctionnalité alcoxy des polysiloxanes à fonctionnalité alcoxy est de 50 à 3% en poids, de préférence de 40 à 5% en poids et de manière particulièrement préférée de 30 à 7% en poids, par rapport à la masse totale du composé.

18. Procédé selon l'une des revendications 9 - 17, **caractérisé en ce que** le catalyseur est choisi parmi le diacétate d'étain, le dioctoate d'étain, le diacétylacétonate de dibutylétain, le dilaurate de dibutylétain, le tétraacétate d'étain, le diacétate de dibutylétain, le dioctoate de dibutylétain, le dioléate de dibutylétain, le diméthoxydibutylétain, le diméthylétain, le benzylmaléate de dibutylétain, le bis-(triéthoxysiloxy)dibutylétain, le diacétate de diphénylétaint, le dilaurate de dioctylétain, le dinéodécanoate de dioctylétain, le tétraéthoxytitane, le tétra-n-propoxytitane, le tétra-i-propoxytitane, le tétra-n-butoxytitane, le tétra-i-butoxytitane, le tétrakis-(2-éthylhexoxy)titane, le di-i-propoxy-bis(éthylacétoacétate)titane, le dipropoxy-bis-(acétylacétonate)-titane, le di-i-propoxy-bis-(acétylacétonate)-titane, le dibutoxy-bis-(acétylacétonate)-titane, le tri-i-acétate-propoxyallyltitane, l'isopropoxyoctylèneglycol-oxyde de titane ou le bis(acétylacétonate)-oxyde de titane, le diacétate de plomb, le di-2-éthylhexanoate de plomb, le dinéodécanoate de plomb, le tétraacétate de plomb, le tétrapropionate de plomb, l'acétylacétonate de zinc, le 2-éthylcaproate de zinc, le diacétate de zinc, le bis-(acide 2-éthylhexanoïque)-zinc, le dinéodécanoate de zinc, le di-undécénoate de zinc, le diméthacrylate de zinc, le dichlorure de tétrakis-(acide 2-éthylhexanoïque)-zirconium, le dichlorure de tétrakis-(acide méthacrylique)-zirconium, le diacétate de cobalt, le carboxylate de bismuth, le triflate de bismuth.

19. Procédé selon l'une des revendications 9 - 18, **caractérisé en ce qu'**au moins un réticulant selon la formule (IV) est utilisé.

20. Procédé selon l'une des revendications 9 - 19, **caractérisé en ce que** le réticulant est choisi parmi le méthyltriacétoxysilane, l'éthyltriacétoxysilane, le diméthyldiacétoxysilane, le méthyltriméthoxysilane, le méthyltriéthoxysilane, le vinyltriméthoxysilane, le vinyltriéthoxysilane, le tétraméthoxysilane, le tétraéthoxysilane, le phényltriéthoxysilane, le phényltriméthoxysilane, le propyltriméthoxysilane, le propyltriéthoxysilane, le diméthyldiméthoxysilane, le diméthyldiéthoxysilane, le diméthoxyphénylméthylsilane et le diéthoxyphénylméthylsilane.

21. Procédé selon l'une des revendications 9 - 20, **caractérisé en ce qu'**on élimine, pendant la transformation, l'ester d'acide acétique formé à partir du radical R² et du groupe acétoxy.

22. Procédé selon la revendication 21, **caractérisé en ce qu'**on élimine de la réaction, par distillation et/ou le cas échéant sous application d'un vide auxiliaire, l'ester de l'acide acétique formé.

23. Procédé selon l'une des revendications 9 - 22, **caractérisé en ce qu'**il s'agit d'une réaction de condensation complète eu égard à l'acétoxysiloxane/au silane utilisé.

24. Utilisation des composés de condensation durcissables selon l'une des revendications 1 - 9 pour la fabrication de revêtements présentant des propriétés antiadhésives, antigraffiti et/ou antisalissure.

25. Produit revêtu présentant un revêtement contenant un composé de condensation selon l'une des revendications 1 - 9.
